# EUROPEAN PATENT SPECIFICATION

(11) **EP 3 290 752 B1**
(45) Date of publication and mention of the grant of the patent: **13.11.2019**
(21) Application number: 16786514.6
(22) Date of filing: 27.04.2016
(51) Int. Cl.: F16H 61/12, F16H 59/70, F16H 61/02, F16H 63/42, F16H 57/02

(54) **STRADDLED VEHICLE**
GRÄTSCHSITZ-TYP FAHRZEUG
VÉHICULE DE TYPE À SELLE

(30) Priority: 28.04.2015 JP 2015091674
(43) Date of publication of application: 07.03.2018
(73) Proprietor: Yamaha Hatsudoki Kabushiki Kaisha, Iwata-shi, Shizuoka 438-8501 (JP)
(72) Inventor: NONAKA, Daisuke, Iwata-shi Shizuoka 438-8501 (JP)
(74) Representative: Stöckeler, Ferdinand
(86) International application number: PCT/JP2016/063178
(87) International publication number: WO 2016/175238

(56) References cited:
- EP-A2- 2 360 399
- WO-A1-2015/004350
- JP-A- H0 891 076
- JP-A- H04 171 353
- JP-A- H10 281 279
- JP-A- 2001 304 400
- JP-A- 2003 240 113
- JP-A- 2006 316 665
- JP-A- 2006 316 665
- JP-A- 2012 237 207
- US-A1- 2004 077 460

## Description

### [Technical Field]

The present invention relates to a straddled vehicle including a gear position sensor failure detector which is configured to detect failure in a gear position sensor.

### [Background Art]

A straddled vehicle including a gear position sensor configured to detect a gear position of a gearbox has been known. The straddled vehicle including the gear position sensor controls an engine based on a signal from the gear position sensor and an engine rotation speed.

A straddled vehicle including a failure detector configured to detect a failure of the gear position sensor is recited in JP H10 281279 A, for example. According to JP H10 281279 A, when it is determined that the gearbox is not in a neutral position, the gear position sensor is deemed to have a failure if a signal from the gear position sensor is out of a normal range of signals.

JP 2006 316665 A discloses a fuel injection control device provided with a gear position sensor, a vehicle speed pulse sensor, an engine rotation speed sensor, a first gear position operation means determining gear position based on data of the gear position sensor, a second gear position operation means determining gear position based on data of the vehicle speed pulse sensor and data of the engine rotation speed sensor, and a gear position selection means determining gear position based on conjunction of gear position determined by the first gear position operation means and gear position determined by the second gear position operation means. If the voltage detected by the gear position sensor is outside a specific range it is judged that the gear position sensor is faulty.

US 2004/0077460 A1 discloses a fuel injection control system for an internal combustion engine, in which a gear position discrimination unit determines the present gear position on the basis of the vehicle speed and the engine speed. A state judgment unit judges whether the engine is in a steady state or in a transient state. A map selection unit selects, on the basis of the judgment result of the engine state, a map for determining a basic injection quantity. In determining the basic injection quantity, a correction factor calculated based on the present gear position is used.

### [Summary of Invention]

### [Technical Problem]

According to the failure detection method of JP H10 281279 A, short-circuit or disconnection is detected by checking whether a signal from the gear position sensor falls within a normal range of voltage values. The present inventors have noticed that, in a straddled vehicle which employs the failure detection method of JP H10 281279 A, there is an undetectable failure of the gear position sensor.

An object of the present invention is to provide a straddled vehicle having a gear position sensor failure detector which is able to improve the capability of detecting a failure of a gear position sensor.

### [Solution to Problem and Advantageous Effects of Invention]

The present inventors evaluated the durability of gear position sensors of straddled vehicles, in consideration of use environments of the straddled vehicles in the market. As a result, it was found that, in some circumstances, the gear position sensor of the straddled vehicle was vibrated for a long period of time. The gear position sensor of the straddled vehicle is, for example, a contact-type sensor with a contact. When such a contact-type gear position sensor is vibrated for a long period of time, the contact of the gear position sensor may wear. As the contact of the gear position sensor wears, the electric resistance at this contact is varied. For this reason, a signal from the gear position sensor is varied. Consequently, a gear position detected based on a signal from the gear position sensor is different from the actual gear position.

In some circumstances, a contaminant such as water and dust may adhere to the gear position sensor of the straddled vehicle. Apart from the above-described contact-type sensor, the gear position sensor may be of another type such as a contactless sensor. Regardless of the type of the gear position sensor, adherence of a contaminant to the gear position sensor changes the electric resistance between the gear position sensor and a component electrically connected to the sensor. As a result, a signal from the gear position sensor is varied. Consequently, a gear position detected based on a signal from the gear position sensor is different from the actual gear position.

As such, on account of vibrations or adherence of a contaminant to the gear position sensor of the straddled vehicle, a phenomenon that a gear position detected based on a signal from the gear position sensor is different from the actual gear position occurs. The present inventors tried to detect this phenomenon occurring in the gear position sensor of the straddled vehicle, as a failure of the gear position sensor by a gear position sensor failure detector. In order to do so, the present inventors found that the straddled vehicle included sensors which were not susceptible to vibrations and adherence of a contaminant. The present inventors tried to detect a failure of the gear position sensor by utilizing signals from the sensors which were not susceptible to vibrations and adherence of a contaminant. Among the sensors of the straddled vehicle, the present inventors selected an engine rotation speed sensor and a vehicle speed sensor as the sensors which were not susceptible to vibrations and adherence of a contaminant. An actual gear position can be estimated based on the engine rotation speed sensor and the vehicle speed sensor. The present inventors found that, by comparing a gear position detected based on a signal from the gear position sensor with an estimated gear position, a failure of the gear position sensor was detectable by the gear position sensor failure detector. With this, the gear position sensor failure detector is able to detect, as a failure of the gear position sensor, the phenomenon that a gear position detected based on a signal from the gear position sensor is different from the actual gear position. It is therefore possible to improve the capability of detecting a failure of a gear position sensor in a straddled vehicle.

A straddled vehicle of the present invention comprises: an engine unit including: a crankshaft; a crankshaft supporter supporting the crankshaft; a gearbox having gear positions with which a rotation speed of the crankshaft is changed at different transmission ratios, respectively, and power input from the crankshaft is transmitted to a driving wheel and a gear position in which the power input from the crankshaft is not transmitted to the driving wheel; and a gearbox supporter supporting the gearbox, the crankshaft supporter and the gearbox supporter being integrally molded; a contactless engine rotation speed sensor configured to detect an engine rotation speed; a contactless vehicle speed sensor configured to detect a vehicle speed; a gear position sensor provided in the gearbox supporter to detect the gear position of the gearbox; and a gear position sensor failure detector configured to detect a failure of the gear position sensor, the gear position sensor failure detector including: a gear position estimation unit configured to estimate the gear position of the gearbox based on a signal from the engine rotation speed sensor and a signal from the vehicle speed sensor; and a failure determination unit configured to determine whether there is a failure of the gear position sensor by comparing the gear position estimated by the gear position estimation unit with the gear position detected by the gear position sensor.

According to this arrangement, the straddled vehicle includes the engine unit. The engine unit includes the crankshaft, the crankshaft supporter, the gearbox, and the gearbox supporter. The gearbox has plural gear positions with each of which the rotation speed of the crankshaft is changed at one of the different transmission ratios, respectively, and the power input from the crankshaft is transmitted to the driving wheel. The gearbox also has a gear position with which the power input from the crankshaft is not transmitted to the driving wheel. The crankshaft supporter supports the crankshaft. The gearbox supporter supports the gearbox. The crankshaft supporter and the gearbox supporter are integrally molded. In addition to the above, the straddled vehicle includes the engine rotation speed sensor, the vehicle speed sensor, the gear position sensor, and the gear position sensor failure detector. The engine rotation speed sensor is configured to detect the engine rotation speed. The vehicle speed sensor is configured to detect the vehicle speed. The gear position sensor is configured to detect the gear position of the gearbox. In other words, the gear position sensor detects one of the gear positions with which the power input from the crankshaft is transmitted to the driving wheel and the gear position with which the power input from the crankshaft is not transmitted to the driving wheel. In accordance with the rotation of the crankshaft, the crankshaft supporter supporting the crankshaft vibrates. The gearbox supporter integrally molded with the crankshaft supporter also vibrates. The gear position sensor provided in the gearbox supporter also vibrates. In other words, the gear position sensor is susceptible to an influence of vibration. The gear position sensor may be provided to be exposed to the outside of the gearbox supporter. In such a case, contaminants such as water and dust are likely to adhere to the gear position sensor. Meanwhile, the gear position sensor may be provided inside the gearbox supporter. In such a case, the gear position sensor is exposed to engine oil which lubricates the inside of the gearbox supporter. The gear position sensor is closer than the vehicle speed sensor is to the detection target. For this reason, contaminants in the engine oil are more likely to adhere to the gear position sensor than to the vehicle speed sensor. In short, contaminants are likely to adhere to the gear position sensor. Meanwhile, the engine rotation speed sensor is a contactless engine rotation speed sensor. The vehicle speed sensor is a contactless vehicle speed sensor. The engine rotation speed sensor and the vehicle speed sensor are therefore not susceptible to an influence of vibration. Furthermore, the engine rotation speed sensor and the vehicle speed sensor may be provided inside the engine unit. Therefore contaminants are unlikely to adhere to the engine rotation speed sensor and the vehicle speed sensor.

The gear position sensor failure detector includes the gear position estimation unit and the failure determination unit. The gear position estimation unit estimates the gear position of the gearbox based on a signal from the engine rotation speed sensor and a signal from the vehicle speed sensor. In other words, the gear position estimation unit detects one of the gear positions with which the power input from the crankshaft is transmitted to the driving wheel and the gear position with which the power input from the crankshaft is not transmitted to the driving wheel. For example, the gear position estimation unit is able to calculate a transmission ratio based on the engine rotation speed and the vehicle speed. Furthermore, the gear position estimation unit is able to estimate the gear position from the calculated transmission ratio. In this connection, as described above, the engine rotation speed sensor and the vehicle speed sensor are not susceptible to an influence of vibration and contaminants are unlikely to adhere to them. It is therefore possible to accurately estimate the gear position based on the signal from the engine rotation speed sensor and the signal from the vehicle speed sensor. The failure determination unit then determines if there is a failure of the gear position sensor by comparing the estimated gear position with the gear position detected by the gear position sensor. In other words, when the estimated gear position is different from the gear position detected by the gear position sensor, a failure that the gear position sensor cannot detect the correct gear position is detected. With this, the gear position sensor failure detector is able to detect, as a failure of the gear position sensor, a phenomenon that a gear position detected based on a signal from the gear position sensor is different from an actual gear position. It is therefore possible to improve the capability of detecting a failure of a gear position sensor in the straddled vehicle.

The straddled vehicle of the present invention is preferably arranged such that, the failure determination unit determines whether there is a failure of the gear position sensor when the signal from the engine rotation speed sensor and the signal from the vehicle speed sensor fall within a predetermined range which is set for the signal from the engine rotation speed sensor and the signal from the vehicle speed sensor in advance.

According to this arrangement, the failure determination unit determines if there is a failure of the gear position sensor when the signal from the engine rotation speed sensor and the signal from the vehicle speed sensor fall within the predetermined range. The predetermined range is set in advance based on the signal from the engine rotation speed sensor and the signal from the vehicle speed sensor. In other words, the predetermined range is set in advance based on a signal voltage range detectable by the engine rotation speed sensor and the vehicle speed sensor. The gear position sensor failure determination unit may not determine if there is a failure of the gear position sensor when the signal from the engine rotation speed sensor and the signal from the vehicle speed sensor do not fall within the predetermined range. As such, the failure determination unit may not perform failure determination of the gear position sensor when the transmission ratio estimated based on the engine rotation speed and the vehicle speed does not fall within a predetermined range. Failure determination is therefore not performed for the gear position sensor when there is a failure of the engine rotation speed sensor or the vehicle speed sensor. Furthermore, depending on how the predetermined range is set, failure determination of the gear position sensor may not be performed when the gear position estimated by the gear position estimation unit is the gear position with which the power input from the crankshaft is not transmitted to the driving wheel. This prevents erroneous detection of a failure of the gear position sensor and further improves the capability of detecting a failure of the gear position sensor. The gear position with which the power input from the crankshaft is not transmitted to the driving wheel is termed a neutral position.

When the signal from the engine rotation speed sensor and the signal from the vehicle speed sensor fall within the predetermined range which is set in advance based on the signal from the engine rotation speed sensor and the signal from the vehicle speed sensor, the signal from one of the engine rotation speed sensor and the vehicle speed sensor falls within a predetermined range which is set in advance based on the signal from the other one of the engine rotation speed sensor and the vehicle speed sensor.

The straddled vehicle of the present invention is preferably arranged such that the predetermined range includes two or more ranges corresponding, respectively, to two or more of the gear positions excluding the gear position in which the power input from the crankshaft is not transmitted to the driving wheel, the two or more ranges not overlapping with one another.

According to this arrangement, the predetermined range includes two or more ranges which correspond to two or more of the gear positions excluding the neutral position, respectively. The two or more ranges do not overlap one another. The failure determination unit determines whether there is a failure of the gear position sensor when the signal from the engine rotation speed sensor and the signal from the vehicle speed sensor fall within the predetermined range. In other words, the failure determination unit may not perform failure determination of the gear position sensor when the transmission ratio estimated from the engine rotation speed and the vehicle speed falls within none of the two or more ranges. It is therefore possible to prevent erroneous detection of a failure of the gear position sensor. The capability of detecting a failure of the gear position sensor is therefore further improved.

The straddled vehicle of the present invention is preferably arranged such that the gearbox includes a clutch which is switchable between a connection state in which the power input from the crankshaft is transmitted to the driving wheel and a cut-off state in which the power input from the crankshaft is not transmitted to the driving wheel, a power non-transmission state detection unit is provided to detect if the gear position of the gearbox is the gear position in which the power input from the crankshaft is not transmitted to the driving wheel, if the clutch is in the cut-off state, and if the clutch is in a half clutch state in which the clutch transmits a part of the power input from the crankshaft, and the failure determination unit does not determine whether there is a failure in the gear position sensor when the power non-transmission state detection unit detects that the gear position of the gearbox is the gear position in which the power input from the crankshaft is not transmitted to the driving wheel, the clutch is in the cut-off state, or the clutch is in the half clutch state in which the clutch transmits a part of the power input from the crankshaft.

According to this arrangement, the gear position sensor failure detector includes the power non-transmission state detection unit. When the gear position of the gearbox is the neutral position, the gear position estimation unit cannot estimate the correct gear position. Furthermore, when the clutch is in the cut-off state or the half clutch state, the gear position estimation unit cannot estimate the correct gear position. The power non-transmission state detection unit detects one of the following states: the gear position of the gearbox is the neutral position; the clutch is in the cut-off state; and the clutch is in the half clutch state. The failure determination unit does not perform failure determination of the gear position sensor when the power non-transmission state detection unit detects one of the following states: the gear position of the gearbox is the neutral position; the clutch is in the cut-off state; and the clutch is in the half clutch state. In other words, the failure determination unit performs failure determination of the gear position sensor when the power non-transmission state detection unit detects none of the following states: the gear position of the gearbox is the neutral position; the clutch is in the cut-off state; and the clutch is in the half clutch state. For this reason, when the gear position of the gearbox is the neutral position or when the clutch is in the cut-off state or the half clutch state, a failure of the gear position sensor is not erroneously detected. The capability of detecting a failure of the gear position sensor is therefore further improved.

Preferably, the straddled vehicle of the present invention further includes a front wheel speed sensor configured to detect a rotation speed of a front wheel and a rear wheel speed sensor configured to detect a rotation speed of a rear wheel, the failure determination unit not determining if there is a failure in the gear position sensor when a difference between the rotation speed of the front wheel detected by the front wheel speed sensor and the rotation speed of the rear wheel detected by the rear wheel speed sensor is equal to or larger than a predetermined value.

When the rear wheel slips and idles, the gear position estimation unit cannot estimate the correct gear position. When the difference between the rotation speed of the front wheel detected by the front wheel speed sensor and the rotation speed of the rear wheel detected by the rear wheel speed sensor is equal to or larger than a predetermined value, it is understood that the rear wheel slips and idles. When the difference between the rotation speed of the front wheel detected by the front wheel speed sensor and the rotation speed of the rear wheel detected by the rear wheel speed sensor is equal to or larger than the predetermined value, the failure determination unit does not perform failure determination of the gear position sensor. In other words, when the difference between the rotation speed of the front wheel detected by the front wheel speed sensor and the rotation speed of the rear wheel detected by the rear wheel speed sensor is smaller than the predetermined value, the failure determination unit performs failure determination of the gear position sensor. It is therefore possible to prevent erroneous detection of a failure of the gear position sensor when the rear wheel idles. The capability of detecting a failure of the gear position sensor is therefore further improved.

The straddled vehicle of the present invention is preferably arranged such that the failure determination unit determines that short-circuit or disconnection occurs in the gear position sensor, when the signal from the gear position sensor is larger than an upper limit of a signal range of the gear position sensor or smaller than a lower limit of the signal range of the gear position sensor, the signal range being set in advance in accordance with the gear positions.

When there is short-circuit or disconnection in the gear position sensor, the signal from the gear position sensor is larger than the upper limit or smaller than the lower limit of the signal range of the gear position sensor corresponding to the plural gear positions. The upper limit and the lower limit of the signal range of the gear position sensor corresponding to the plural gear positions are set in advance. The failure determination unit determines that short-circuit or disconnection occurs in the gear position sensor, when the signal from the gear position sensor is larger than the upper limit or smaller than the lower limit of a signal range of the gear position sensor corresponding to the plural gear positions. The capability of detecting a failure of the gear position sensor is therefore further improved.

### [Brief Description of Drawings]

[FIG. 1] FIG. 1 is a schematic side view of a motorcycle of an embodiment.
[FIG. 2] FIG. 2 is a control block diagram of the motorcycle of FIG. 1.
[FIG. 3] FIG. 3 is a schematic diagram of an engine unit of the motorcycle of FIG. 1.
[FIG. 4] FIG. 4 is a schematic cross section of a gearbox of the motorcycle of FIG. 1.
[FIG. 5] FIG. 5 is a schematic side view of the engine unit of the motorcycle of FIG. 1.
[FIG. 6] FIG. 6 is a gear position estimation map corresponding to an engine rotation speed and a vehicle speed.
[FIG. 7] FIG. 7 is a flowchart showing an example of steps of failure detection by a gear position sensor failure detector.
[FIG. 8] FIG. 8 is a flowchart showing an example of steps of failure detection by the gear position sensor failure detector.
[FIG. 9] FIG. 9 is a gear position estimation map used for failure detection in a gear position sensor of a modification.

### [Description of Embodiments]

The following describes an embodiment of the present invention. A motorcycle 1 of the present embodiment is an example of a straddled vehicle of the present invention. Hereinafter, a front-rear direction is a vehicle front-rear direction for a rider seated on a below-described seat 9 of the motorcycle 1. A left-right direction is a vehicle left-right direction for the rider seated on the seat 9. The vehicle left-right direction is identical to a vehicle width direction. In each figure related to the present embodiment, arrows F, B, U, D, L, and R indicate forward, rearward, upward, downward, leftward, and rightward, respectively.

### [Overall Structure of Motorcycle]

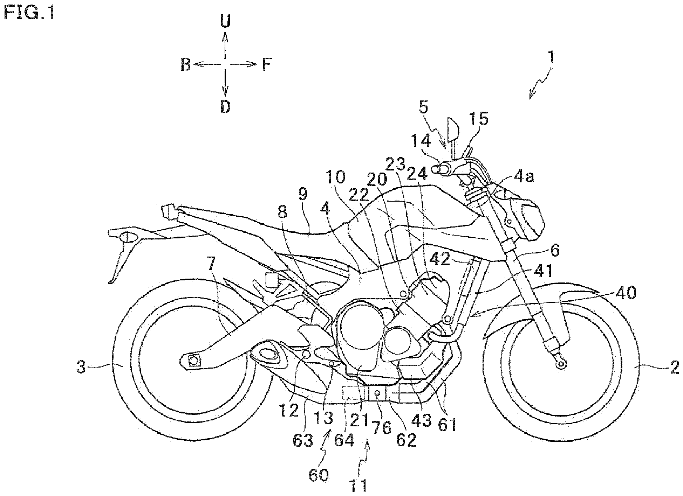

As shown in FIG. 1, the motorcycle 1 includes a front wheel 2, a rear wheel 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel 2.

The vehicle body frame 4 swingably supports a pair of swingarms 7. The rear end portions of the swingarms 7 support the rear wheel 3. Each swingarm 7 is connected, at a portion rearward of the swing center, to the vehicle body frame 4 via a rear suspension 8.

The vehicle body frame 4 supports the seat 9 and a fuel tank 10. The fuel tank 10 is provided in front of the seat 9. The vehicle body frame 4 supports the engine unit 11. The engine unit 11 is provided straight below the seat 9 and the fuel tank 10. The vehicle body frame 4 supports a battery (not illustrated). The battery supplies electric power to electronic devices such as an ECU 90 and sensors which will be described later.

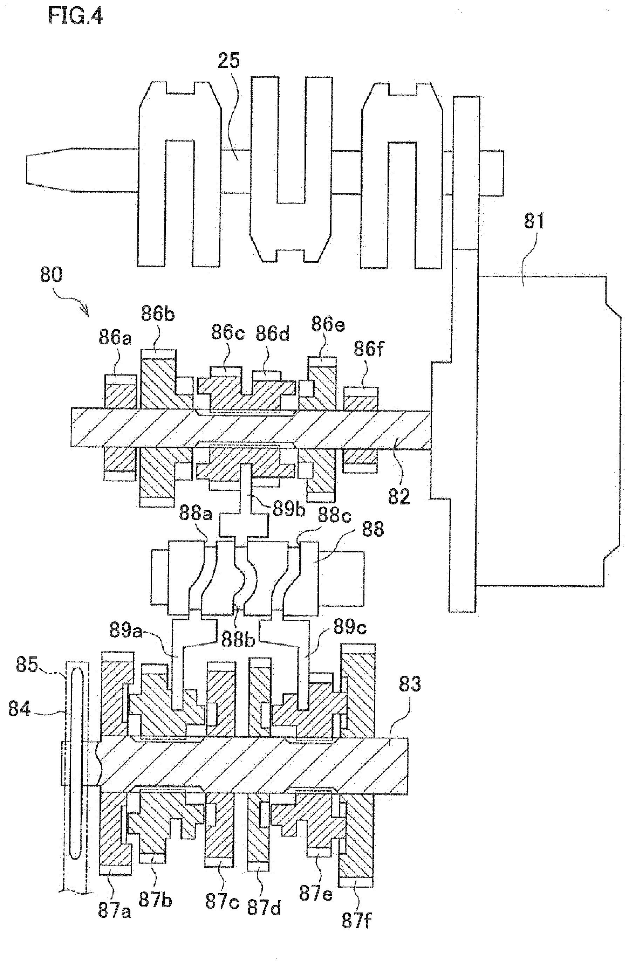

The motorcycle 1 includes footrests 12 at lower left and right portions. A brake pedal 13 is provided in front of the right footrest 12. As the rider operates the brake pedal 13, the rotation of the rear wheel 3 is braked. A shift pedal which is not illustrated is provided in front of the left footrest 12. This shift pedal is operated when the gear position of a later-described gearbox 80 (see FIG. 4) is changed. Alternatively, a shift switch may be provided on the handle unit 5 in place of the shift pedal.

The motorcycle 1 includes an unillustrated side stand at a lower left portion. The side stand allows the motorcycle 1 to stand when the motorcycle 1 is stopped. The motorcycle 1 further includes a side stand switch (not illustrated) which is turned on when the side stand is in a stand state and is turned off when the side stand is in a retracted state.

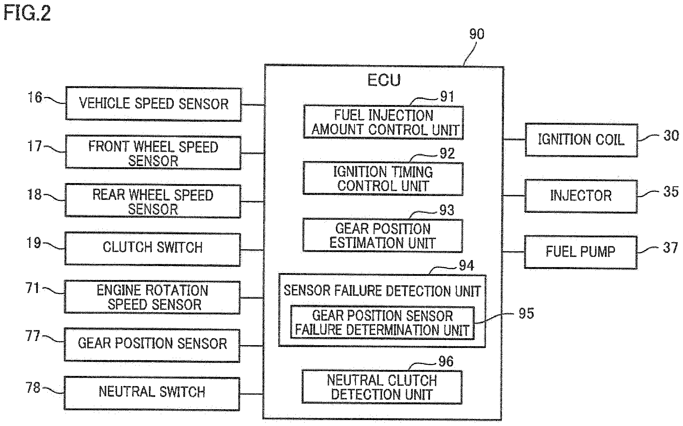

The handle unit 5 includes a throttle grip 14, a brake lever (not illustrated), and a clutch lever (not illustrated). The throttle grip is operated for adjusting the output of the engine. The brake lever is operated for braking the rotation of the front wheel 2. The clutch lever relates to a clutch 81 (see FIG. 4) of a later-described gearbox 80. The clutch lever is operated when the power transmission from a crankshaft 25 to the rear wheel 3 via the clutch 81 is cut off. A clutch switch 19 (see FIG. 2) is provided on the handle unit 5 to detect the degree of movement of the clutch lever. When the clutch lever is gripped, a contact part of the clutch switch 19 is in conduction and an electric signal is output from the clutch switch 19. This state is termed an on state of the clutch switch 19. When the clutch lever is released, the clutch switch 19 does not output an electric signal. This state is termed an off state of the clutch switch.

Various types of switches operated by the rider are provided on the handle unit 5. Although not illustrated, these switches include a main switch, an engine start switch, and an engine stop switch. The main switch may be a key switch operated by a key, for example. When the main switch is turned on, electric power stored in a battery is supplied to electronic components such as the ECU 90 and sensors. When the main switch is turned off, the power supply from the battery to the ECU 90 is stopped. A time from the switch-off of the main switch to the stop of the power supply is different between the electric components. Even after the main switch is turned off, the electric power is continuously supplied to the ECU 90 for a predetermined time. The engine start switch is operated to start the engine unit 11. The engine stop switch is operated to stop the engine unit 11.

The motorcycle 1 includes a display 15. The display 15 is attached to the handle unit 5. The display 15 is positioned to be viewable by the rider seated on the seat 9. The display 15 may not be attached to the handle unit 5. The display 15 is configured to display vehicle speed, engine rotation speed, gear position, warnings, and the like. As shown in FIG. 2, the motorcycle 1 includes a vehicle speed sensor 16 which is configured to detect the running speed (vehicle speed) of the motorcycle 1. The vehicle speed sensor 16 is a contactless vehicle speed sensor. The motorcycle 1 further includes a front wheel speed sensor 17 configured to detect the rotation speed of the front wheel 2. The motorcycle 1 further includes a rear wheel speed sensor 18 configured to detect the rotation speed of the rear wheel 3.

### [Structure of Engine Unit]

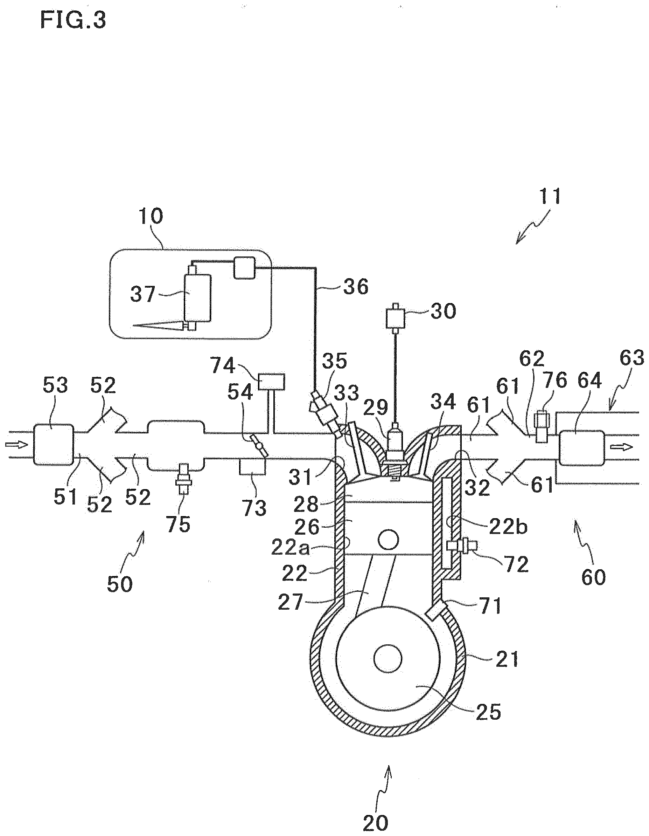

As shown in FIG. 1 and FIG. 3, the engine unit 11 includes an engine main body 20. The engine unit 11 further includes a water cooling unit 40 (see FIG. 1), an intake unit 50 (see FIG. 3), an exhaust unit 60, and the gearbox 80 (see FIG. 4). The engine unit 11 is a water-cooled engine. The engine unit 11 is a three-cylinder engine including three cylinders. The engine unit 11 is a four-stroke single-cycle engine. The four-stroke single-cycle engine repeats, in each cylinder, an intake process, a compression process, a combustion process (expansion process), and an exhaust process. The combustion process in the three-cylinder engine is performed at different timings in the respective three cylinders.

The water cooling unit 40 is configured to cool the engine main body 20. Hot coolant water, which has absorbed the heat of the engine main body 20, is sent to the water cooling unit 40. The water cooling unit 40 cools the coolant water sent from the engine main body 20 and returns the water to the engine main body 20. While in the present embodiment a cooling medium for cooling the engine main body 20 is water, liquid other than water may be used as the cooling medium. As shown in FIG. 1, the water cooling unit 40 includes a radiator 41, a radiator fan 42, a reserve tank 43, and a water pump (not illustrated). The radiator 41 is provided in front of an upper part of the engine main body 20. The radiator fan 42 is provided between the radiator 41 and the engine main body 20. As the radiator fan 42 is driven, an air flow passes through the radiator 41. The coolant water flowing in the radiator 41 is cooled by the air flow passing through the radiator 41. The reserve tank 43 is provided in front of a right part of the engine main body 20 and temporarily stores the coolant water. The radiator fan 42 is driven in sync with the crankshaft 25. The water pump is driven in sync with the crankshaft 25.

As shown in FIG. 1, the engine main body 20 includes a crankcase 21, a cylinder body 22, a cylinder head 23, and a head cover 24. The cylinder body 22 is attached to an upper end portion of the crankcase 21. The cylinder head 23 is attached to an upper end portion of the cylinder body 22. The head cover 24 is attached to an upper end portion of the cylinder head 23.

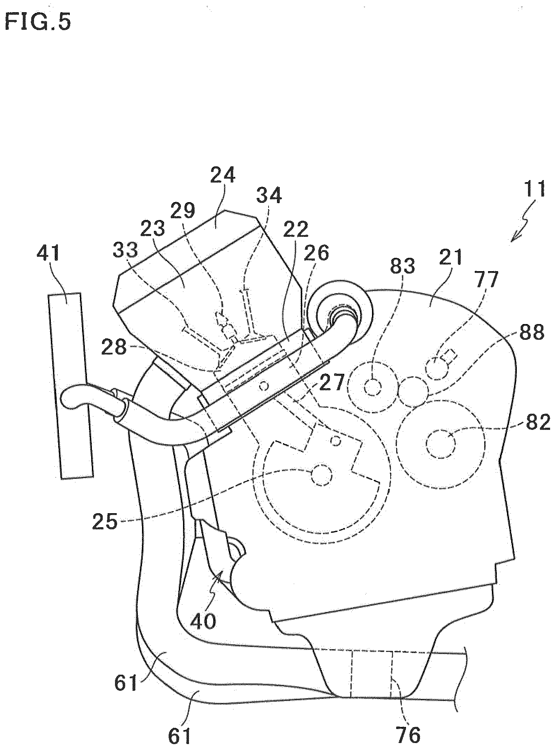

As shown in FIG. 3 and FIG. 5, the crankcase 21 houses the crankshaft 25. The crankcase 21 supports the crankshaft 25. The crankcase 21 is equivalent to a crankshaft supporter of the present invention. FIG. 3 shows only one of the three cylinders of the engine main body 20 and does not show the remaining two cylinders. The engine unit 11 includes an engine rotation speed sensor 71 (see FIG. 2 and FIG. 3). The engine rotation speed sensor 71 detects the rotation speed of the crankshaft 25, i.e., the engine rotation speed. The engine rotation speed indicates the rotation number of the crankshaft 25 per unit time. The engine rotation speed sensor 71 is a contactless engine rotation speed sensor.

As shown in FIG. 4 and FIG. 5, the crankcase 21 houses the gearbox 80. The crankcase 21 supports the gearbox 80. The crankcase 21 is equivalent to a gearbox supporter of the present invention. The crankcase 21 is formed by using a die, e.g., by casting. In other words, the crankcase 21 is equivalent to the crankshaft supporter and the gearbox supporter of the present invention, which are integrally molded. The crankcase 21 may not be formed by using a die, as long as it is a single seamless member. In the present case, the crankshaft supporter and the gearbox supporter are seamlessly molded together. The gearbox 80 transmits power input from the crankshaft 25 to the rear wheel 3. The driving wheel of the motorcycle 1 is therefore the rear wheel 3. The gearbox 80 changes the rotation speed of the crankshaft 25 at multiple transmission ratios. It is noted that FIG. 4 is not a cross section cut along a single plane. FIG. 4 is a cross section passing the crankshaft 25 and a main shaft 82, a drive shaft 83, and a shift cam 88 of the gearbox 80, which will be described below. In FIG. 4, however, the crankshaft 25 and the shift cam 88 are not cross sections but profiles.

The gearbox 80 includes the clutch 81, the main shaft 82, and the drive shaft 83. The main shaft 82 and the drive shaft 83 are arranged to be in parallel to the crankshaft 25. A sprocket 84 is attached to the drive shaft 83. The sprocket 84 is connected to the rear wheel 3 via a chain 85. The chain 85 may be replaced with a belt.

The clutch 81 is attached to the main shaft 82. The clutch 81 is switchable between a connection state in which the power input from the crankshaft 25 is transmitted to the main shaft 82 and a cut-off state in which the power input from the crankshaft 25 is not transmitted to the main shaft 82. When the clutch lever (not illustrated) is released by the rider and the clutch switch 19 is in the off state, the clutch 81 is in the connection state. When the clutch 81 is in the connection state, the power input from the crankshaft 25 is transmitted to the main shaft 82. The rotation speed of the main shaft 82 is synchronized with the rotation speed of the crankshaft 25. Meanwhile, when the clutch lever is gripped by the rider and the clutch switch 19 is in the on state, the clutch 81 is in the cut-off state. When the clutch 81 is in the cut-off state, the power input from the crankshaft 25 is not transmitted to the main shaft 82. The rotation speed of the main shaft 82 is not synchronized with the rotation speed of the crankshaft 25. When the gripping or the releasing of the clutch lever is stopped halfway, and the clutch switch 19 is in the on state, the clutch 81 is in a half clutch state. The clutch 81 in the half clutch state transmits a part of the power input from the crankshaft 25 to the main shaft 82. The clutch 81 is a typical clutch such as a friction clutch. The structure of the clutch 81 is not detailed.

Six shift gears 86a, 86b, 86c, 87d, 86e, and 86f are attached to the main shaft 82. The shift gears 86a, 86b, 86c, 87d, 86e, and 86f are different from one another in number of teeth. Six shift gears 87a, 87b, 87c, 87d, 87e, and 87f are attached to the drive shaft 83. The shift gears 87a, 87b, 87c, 87d, 87e, and 87f are different from one another in number of teeth. The six shift gears 86a to 86f of the main shaft 82 are engaged with the six shift gears 87a to 87f of the drive shaft 83, respectively. The shift gears 86b and 86e are provided to idle against the main shaft 82. The shift gears 87b and 87e respectively engaged with the shift gears 86b and 86e are arranged to rotate together with the drive shaft 83. The shift gears 87a, 87c, 87d, and 87f are provided to idle against the drive shaft 83. The shift gears 87a, 87c, 87d, and 87f respectively engaged with the shift gears 86a, 86c, 86d, and 86f are arranged to rotate together with the main shaft 82.

The shift gears 86c and 86d are attached to the main shaft 82 to be movable in the axial direction. The shift gears 86c and 86d are connected to each other and move together in the axial direction. The shift gears 87b and 87e are attached to the drive shaft 83 to be movable in the axial direction. Hereinafter, the shift gears 86c, 86d, 87b, and 87e will be referred to as movable shift gears. A side face of the movable shift gear 86c can be engaged with a side face of the shift gear 86b which faces the movable shift gear 86c in the axial direction. A side face of the movable shift gear 86d can be engaged with a side face of the shift gear 86e which faces the movable shift gear 86d in the axial direction. The side faces of the movable shift gear 87b can be engaged with the side faces of the shift gears 87a and 87c which face the movable shift gear 87b in the axial direction. The side faces of the movable shift gear 87e can be engaged with the side faces of the shift gears 87d and 87f which face the movable shift gear 87e in the axial direction.

When the clutch 81 is in the connection state and a movable shift gear is engaged with a shift gear facing the movable shift gear in the axial direction, these two shift gears rotate together. As a result, the power input to the main shaft 82 is transmitted to the drive shaft 83. The rear wheel 3 connected to the drive shaft 83 rotates at the same rotation speed as the drive shaft 83. The rotation speed of the drive shaft 83 may not be identical with the rotation speed of the rear wheel 3. The ratio of the rotation speed of the drive shaft 83 to the rotation speed of the main shaft 82 varies depending on which pair of shift gears are engaged. The ratio of the rotation speed of the drive shaft 83 to the rotation speed of the main shaft 82 is termed a transmission ratio of the gearbox 80. When the rotation speed of the main shaft 82 is identical with that of the crankshaft 25 and the rotation speed of the drive shaft 83 is identical with that of the rear wheel 3, the transmission ratio is equivalent to a ratio of the rotation speed of the rear wheel 3 to the rotation speed of the crankshaft 25.

The gearbox 80 has six gear positions corresponding to six transmission ratios, respectively. The six transmission ratios are first speed to sixth speed. When the gear position is one of the first speed to the sixth speed, the power is transmitted from the main shaft 82 to the drive shaft 83. In other words, when the gear position is one of the first speed to the sixth speed, the power input from the crankshaft 25 is transmitted to the rear wheel 3. At the gear positions which are the first speed to the sixth speed, the rotation speed of the crankshaft 25 is transmitted at different transmission ratios. For example, when the movable shift gear 87e is engaged with the shift gear 87d, the power input to the main shaft 82 is transmitted to the drive shaft 83 via the shift gears 86d, 87d, and 87e. The transmission ratio of the gearbox 80 in this case corresponds to the gear ratio of the shift gear 86d to the shift gear 87d. The gear ratio is a ratio of the number of teeth of a gear to the number of teeth of another gear. The gearbox 80 has a gear position in which none of the movable shift gears is engaged with the shift gears lined up in the axial direction. This gear position is termed a neutral position. In the neutral position, power is not transmitted from the main shaft 82 to the drive shaft 83. In other words, when the gear position is the neutral position, the power input from the crankshaft 25 is not transmitted to the rear wheel 3. The gearbox 80 of the present embodiment has seven gear positions constituted by six gear positions which are the first speed to the sixth speed and one neutral position. In other words, the gearbox 80 has seven switchable gear positions.

As a mechanism for moving the movable shift gears 86c, 86d, 87b, and 87e in the axial direction, the gearbox 80 has the shift cam 88 and three shift forks 89a, 89b, and 89c. The shift cam 88 is substantially a cylindrical prism in shape. The shift cam 88 has three annular cam grooves 88a, 88b, and 88c in an outer circumferential surface. One end portions of the three shift forks 89a to 89c are inserted into the three cam grooves 88a to 88c, respectively. The other end portion of the shift fork 89b is engaged with the outer circumferential surfaces of the movable shift gears 86c and 86d, whereas the shift forks 89a and 89c are engaged with the outer circumferential surfaces of the movable shift gears 87b and 87e, respectively. As the shift cam 88 rotates, the shift forks 89a to 89c move in the axial direction along the cam grooves 88a to 88c, respectively. With this, the movable shift gears 86c, 86d, 87b, and 87e move in the axial direction and the gear position of the gearbox 80 is changed. The shift cam 88 is driven by an unillustrated shift actuator. As the rider operates the shift pedal (not illustrated), the shift actuator is controlled by the later-described ECU 90. As a result, the rotation of the shift cam 88 is controlled.

As shown in FIG. 2 and FIG. 5, the engine unit 11 includes a gear position sensor 77. The gear position sensor 77 is attached to the inside of the crankcase 21. The gear position sensor 77 is provided in the vicinity of the shift cam 88. In the present embodiment, the gear position sensor 77 is provided to be remote from the shift cam 88 in the radial direction. The gear position sensor 77 may be provided to overlap the shift cam 88 in the axial direction. The gear position sensor 77 is configured to detect the gear position of the gearbox 80 based on the rotational position of the shift cam 88. The gear position sensor 77 detects that the gear position of the gearbox 80 is one of the first speed to the sixth speed and the neutral position. The gear position sensor 77 is a contact-type gear position sensor. The contact-type gear position sensor is formed of a rotary switch. The rotary switch has a rotary contact and a plurality of fixed contacts. The rotary contact is connected to a ground terminal. The rotary contact rotates in sync with the rotation of the shift cam 88. The fixed contacts are fixed contacts corresponding to the first speed to the sixth speed, respectively, and a fixed contact corresponding to the neutral position. The fixed contacts are connected to resistors with different resistance values. The fixed contacts are provided on the track of the rotation of the rotary contact. The rotary contact is connected to one of the fixed contacts as a result of the rotation. The gear position sensor 77 then outputs a voltage signal to the later-described ECU 90.

As shown in FIG. 2, the engine unit 11 includes a neutral switch 78. The neutral switch 78 is equivalent to a neutral sensor. The neutral switch 78 is configured to detect whether the gear position of the gearbox 80 is the neutral position, based on the rotational position of the shift cam 88. When the gear position of the gearbox 80 is the neutral position, a contact component of the neutral switch 78 is in conduction and an electric signal is output from the neutral switch 78. The state in which the electric signal is output from the neutral switch 78 is equivalent to an on state of the neutral switch 78. When the gear position of the gearbox 80 is different from the neutral position, the neutral switch 78 does not output an electric signal. The state in which the electric signal is not output from the neutral switch 78 is equivalent to an off state of the neutral switch 78. The display 15 displays that the neutral switch 78 is in the on state or the off state. The neutral switch 78 may be able to detect that the gear position of the gearbox 80 is one of the first speed to the sixth speed and the neutral position. The display 15 may not display that the neutral switch 78 is in the on state or the off state.

Although not illustrated, the crankcase 21 includes a starter motor and a generator. The starter motor and the generator are connected to the crankshaft 25. The starter motor is driven by power from a battery. The starter motor rotates the crankshaft 25 at the start of the engine unit 11. The generator generates power by the rotational force of the crankshaft 25. The battery is charged with the generated power. The starter motor and the generator may be integrated.

The crankcase 21 includes, at a lower portion, an oil pan (not illustrated) which stores lubrication oil. The crankcase 21 houses an oil pump (not illustrated). The oil pump sucks the lubrication oil stored in the oil pan. The lubrication oil is conveyed by a pressure from the oil pump and circulates in the engine main body 20.

Three cylinder holes 22a (see FIG. 3) are formed in the cylinder body 22. The three cylinder holes 22a are side by side in the left-right direction. A piston 26 is slidably housed in each cylinder hole 22a. The three pistons 26 are connected to a single crankshaft 25 via three connecting rods 27. In the cylinder body 22, a cooling passage 22b is provided around the three cylinder holes 22a to allow the coolant water to flow in the cooling passage 22b. The engine unit 11 includes a coolant water temperature sensor 72 configured to detect the temperature of the coolant water in the cooling passage 22b. The coolant water temperature sensor 72 outputs a voltage signal corresponding to the temperature of the coolant water which is the target of detection. Based on the temperature of the coolant water detected by the coolant water temperature sensor 72, it is possible to grasp the temperature of the cylinder body 22. In other words, the coolant water temperature sensor 72 indirectly detects the temperature of the engine main body 20.

A combustion chamber 28 is formed by a lower surface of the cylinder head 23, a cylinder hole 22a, and a piston 26. The engine main body 20 includes three combustion chambers 28. A leading end portion of an ignition plug 29 is provided in the combustion chamber 28. The ignition plug 29 is configured to ignite a mixture gas of fuel and air in the combustion chamber 28. The ignition plug 29 is connected to an ignition coil 30. The ignition coil 30 stores electric power to cause spark discharge of the ignition plug 29.

The cylinder head 23 includes an intake passage member 31 and an exhaust passage member 32 for each combustion chamber 28. In this specification, a passage member is a structure forming a path. A path is a space through which gas or the like passes. The intake passage member 31 introduces air into the combustion chamber 28. The exhaust passage member 32 exhausts combustion gas (exhaust gas) generated in the combustion chamber 28 during a combustion process. An opening on the combustion chamber 28 side of the intake passage member 31 is opened and closed by an intake valve 33. An opening on the combustion chamber 28 side of the exhaust passage member 32 is opened and closed by an exhaust valve 34. The intake valve 33 and the exhaust valve 34 are opened and closed by a valve driving device (not illustrated). The valve driving device is housed in the cylinder head 23. The valve driving device operates in sync with the crankshaft 25.

As shown in FIG. 3, the intake unit 50 includes an intake passage member 51 and three branched intake passage members 52. One end of the intake passage member 51 is open to the atmosphere. The other end of the intake passage member 51 is connected to the three branched intake passage members 52. An air filter 53 is provided in the intake passage member 51. The three branched intake passage members 52 are connected to three intake passage members 31 of the cylinder head 23, respectively. Air taken from the one end of the intake passage member 51 is supplied to the engine main body 20 via the three branched intake passage members 52.

The engine unit 11 includes an injector 35 which is configured to supply fuel to the combustion chamber 28. The injector 35 is positioned to inject fuel in the intake passage member 31 of the cylinder head 23 or the branched intake passage member 52. Alternatively, the injector 35 may be positioned to inject fuel in the combustion chamber 28. The injector 35 is provided for each combustion chamber 28. The injector 35 is connected to a fuel tank 10 via a fuel hose 36. A fuel pump 37 is provided inside the fuel tank 10. The fuel pump 37 supplies fuel in the fuel tank 10 to the fuel hose 36 with a pressure.

A throttle valve 54 is provided in the branched intake passage member 52. The throttle valve 54 is connected to the throttle grip 14 by an unillustrated throttle wire. The opening degree of the throttle valve 54 is changed as the rider rotationally operates the throttle grip 14. The throttle valve 54 may be an electronic throttle valve which is arranged such that the opening degree is controlled by the ECU 90 in accordance with an operation of the throttle grip 14.

A throttle opening degree sensor (throttle position sensor) 73, an intake pressure sensor 74, and an intake temperature sensor 75 are provided in the branched intake passage member 52. The throttle opening degree sensor 73 detects the position of the throttle valve 54 and outputs a signal indicating the opening degree of the throttle valve 54. Hereinafter, the opening degree of the throttle valve 54 will be referred to as a throttle opening degree. The intake pressure sensor 74 is configured to detect the pressure in the branched intake passage member 52. The intake temperature sensor 75 is configured to detect the temperature of air in the branched intake passage member 52.

As shown in FIG. 1 and FIG. 3, the exhaust unit 60 includes three independent exhaust passage members 61, a collective exhaust passage member 62, and a muffler member 63. The three independent exhaust passage members 61 are connected to three exhaust passage members 32 of the cylinder head 23, respectively. The other ends of the three independent exhaust passage members 61 are connected to one end of the collective exhaust passage member 62. The other end of the collective exhaust passage member 62 is connected to the muffler member 63. The muffler member 63 is a device for reducing noise generated by exhaust gas. The muffler member 63 houses a catalyst 64 which purifies exhaust gas. The exhaust gas discharged from the three exhaust passage members 32 of the engine main body 20 passes the three independent exhaust passage members 61 and the collective exhaust passage member 62 and then flows into the muffler member 63. The exhaust gas having flown into the muffler member 63 is purified by the catalyst 64 and is then discharged to the atmosphere. As shown in FIG. 1 and FIG. 3, an oxygen sensor 76 is provided on the collective exhaust passage member 62. The oxygen sensor 76 is configured to detect the oxygen density in the exhaust gas.

The motorcycle 1 includes the ECU (Electronic Control Unit) 90 which is configured to control the components of the motorcycle 1. The ECU 90 may be a single device provided at a single position or may be formed of a plurality of devices which are positionally separated from one another. As shown in FIG. 2, the ECU 90 is connected to sensors such as the vehicle speed sensor 16, the front wheel speed sensor 17, the rear wheel speed sensor 18, the clutch switch 19, the engine rotation speed sensor 71, the gear position sensor 77, and the neutral switch 78. The ECU 90 is connected to members such as the ignition coil 30, the injector 35, the fuel pump 37, the starter motor (not illustrated), the engine start switch (not illustrated), and the engine stop switch (not illustrated).

The ECU 90 includes members such as a CPU (Central Processing Unit), a ROM (Read Only Memory), and a RAM (Random Access Memory). The CPU performs information processing based on programs and data stored in the ROM and the RAM. As shown in FIG. 2, the ECU 90 includes, as function processors, a fuel injection amount control unit 91, an ignition timing control unit 92, a gear position estimation unit 93, a sensor failure detection unit 94, and a neutral clutch detection unit (power non-transmission state detection unit) 96. The fuel injection amount control unit 91 controls a fuel injection amount. The ignition timing control unit 92 controls an ignition timing. The gear position estimation unit 93 estimates the gear position of the gearbox 80. The sensor failure detection unit 94 detects a failure of sensors. The neutral clutch detection unit 96 detects the on state of the neutral switch 78 or the clutch switch 19. The sensor failure detection unit 94 includes a gear position sensor failure determination unit 95. The gear position sensor failure determination unit 95 detects a failure of the gear position sensor 77. The ECU 90 is equivalent to a gear position sensor failure detector of the present invention. The sensor failure detection unit 94 and the gear position sensor failure determination unit 95 are equivalent to a failure determination unit of the present invention. When the sensor failure detection unit 94 detects a failure of a sensor, the ECU 90 causes the display 15 to display a warning.

When the engine start switch is switched on, the ECU 90 starts the engine unit 11 by driving the starter motor. The fuel injection amount control unit 91 drives the fuel pump 37 and the injector 35 based on a signal from the sensors 71 to 77 or the like, so as to control the fuel injection amount of the injector 35. The ignition timing control unit 92 controls electric conduction to the ignition coil 30 based on a signal from the sensors 71 to 77 or the like, so as to control the ignition timing. The ignition timing indicates a timing at which the ignition plug 29 discharges electricity. When the engine stop switch is switched on, the ignition timing control unit 92 stops the electric conduction to the ignition coil 30, and the fuel injection amount control unit 91 stops the fuel injection from the injector 35 to stop the engine unit 11.

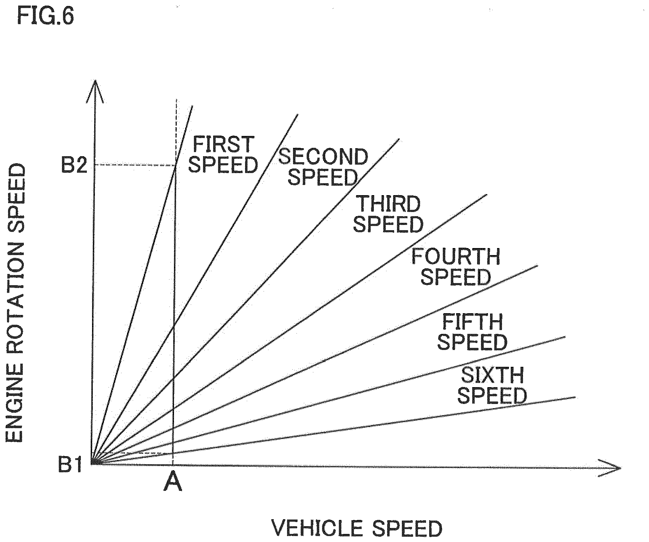

The gear position estimation unit 93 estimates the gear position of the gearbox 80 based on a signal from the engine rotation speed sensor 71 and a signal from the vehicle speed sensor 16. The gear position estimated by the gear position estimation unit 93 is termed an estimated gear position. The gear position estimation unit 93 figures out the estimated gear position by using a gear position estimation map shown in FIG. 6, for example. In the gear position estimation map, a gear position is associated with an engine rotation speed and a vehicle speed. The gear position estimation map is stored in the ROM. The gear position estimation map is generated based on the fact that an engine rotation speed is in proportion to a vehicle speed when the transmission ratio is constant. The transmission ratios are set to correspond to the gear positions which are the first speed to the sixth speed. Each of the transmission ratios of the actual gearbox 80 corresponding to the first speed to the sixth speed is a single value without a margin. However, the gear position estimation map sets each of the transmission ratios corresponding to the first speed to the sixth speed as a value with a margin. The reasons of this are as follows. Even when detection signals by which the vehicle speed and the engine rotation speed detected are uneven, the gear position must be estimated. Furthermore, when the gear position is changed, it takes time until a signal from the vehicle speed sensor 16 is converged to a signal corresponding to the vehicle speed corresponding to the gear position after the change. In order to achieve swift estimation of the gear position, the gear position estimation map sets each of the transmission ratios corresponding to the first speed to the sixth speed as a value with a margin. In other words, in the gear position estimation map shown in FIG. 6, a range of the engine rotation speeds and a range of the vehicle speeds, which correspond to each of the first speed to the sixth speed, are shown as a region. The gear position estimation unit 93 estimates the gear position of the gearbox 80 based on an engine rotation speed corresponding to a signal from the engine rotation speed sensor 71 and a vehicle speed corresponding to a signal from the vehicle speed sensor 16. In the gear position estimation map shown in FIG. 6, six regions are set so as to correspond to the first speed to the sixth speed, respectively. These six regions do not overlap one another.

When a signal from the engine rotation speed sensor 71 and a signal from the vehicle speed sensor 16 are out of the regions corresponding to the first speed to the sixth speed in the gear position estimation map of FIG. 6, an estimated gear position is the neutral position. To put it differently, when a signal from the engine rotation speed sensor 71 and a signal from the vehicle speed sensor 16 are out of the regions corresponding to the first speed to the sixth speed in the gear position estimation map of FIG. 6, an estimated gear position is none of the gear positions other than the neutral position. In this connection, when the gear position of the gearbox 80 is the neutral position, the power input from the crankshaft 25 is not transmitted to the rear wheel 3 at a particular transmission ratio. On this account, when the gear position of the gearbox 80 is the neutral position, the signal from the engine rotation speed sensor 71 and the signal from the vehicle speed sensor 16 may be or may not be in one of the regions corresponding to the first speed to the sixth speed in the gear position estimation map of FIG. 6. Furthermore, in a manner similar to the case where the gear position of the gearbox 80 is the neutral position, when the clutch 81 of the gearbox 80 is in the cut-off state or the half clutch state, the signal from the engine rotation speed sensor 71 and the signal from the vehicle speed sensor 16 may be or may not be in one of the regions corresponding to the first speed to the sixth speed in the gear position estimation map of FIG. 6. For this reason, when the gear position of the gearbox 80 is the neutral position or when the clutch 81 of the gearbox 80 is in the cut-off state or the half clutch state, the gear position estimation unit 93 may not be able to estimate the correct gear position.

The estimated gear position estimated by the gear position estimation unit 93 is used for the later-described detection of a failure of the gear position sensor 77 by the gear position sensor failure determination unit 95 and driving control of the motorcycle 1.

The neutral clutch detection unit 96 detects the on state of the neutral switch 78 or the clutch switch 19. When the gear position of the gearbox 80 is the neutral position, the neutral clutch detection unit 96 detects the on state of the neutral switch 78. When the clutch 81 is in the cut-off state or the half clutch state, the neutral clutch detection unit 96 detects the on state of the clutch switch 19. In short, the neutral clutch detection unit 96 detects a case where the gear position estimation unit 93 cannot estimate the correct gear position.

The sensor failure determination unit 94 causes the gear position sensor failure determination unit 95 to determine whether there is a failure of the gear position sensor 77 when the neutral clutch detection unit 96 does not detect the on state of the neutral switch 78 or the clutch switch 19. The sensor failure determination unit 94 does not cause the gear position sensor failure determination unit 95 to determine whether there is a failure of the gear position sensor 77 when the neutral switch 78 or the clutch switch 19 is in the on state. In other words, the sensor failure detection unit 94 performs failure determination of the gear position sensor 77 by the gear position sensor failure determination unit 95 when the neutral switch 78 is in the off state and the clutch switch 19 is in the off state. In other words, the sensor failure detection unit 94 performs failure determination of the gear position sensor 77 by the gear position sensor failure determination unit 95 when the gear position of the gearbox 80 is not the neutral position and the clutch 81 is neither in the cut-off state nor the half clutch state.

The sensor failure determination unit 94 determines if the estimated gear position estimated by the gear position estimation unit 93 is different from the neutral position, when the neutral clutch detection unit 96 does not detect the on state of the neutral switch 78 or the clutch switch 19. When the sensor failure detection unit 94 determines that the estimated gear position is a gear position different from the neutral position, the sensor failure detection unit 94 performs failure determination of the gear position sensor 77 by the gear position sensor failure determination unit 95. Meanwhile, when the sensor failure detection unit 94 determines that the estimated gear position is not a gear position different from the neutral position, the sensor failure detection unit 94 does not perform failure determination of the gear position sensor 77 by the gear position sensor failure determination unit 95.

The sensor failure detection unit 94 determines that the estimated gear position is a gear position different from the neutral position when the signal from the engine rotation speed sensor 71 and the signal from the vehicle speed sensor 16 are in a predetermined range. The predetermined range is set in advance based on the signal from the vehicle speed sensor 16 and the signal from the engine rotation speed sensor 71. In the present embodiment, the predetermined range is set in advance based on the gear position estimation map of FIG. 6. In other words, the predetermined range is set in advance based on a signal voltage range detectable by the vehicle speed sensor 16 and the engine rotation speed sensor 71. The sensor failure detection unit 94 determines that the estimated gear position is a gear position different from the neutral position when the signal from the engine rotation speed sensor 71 and the signal from the vehicle speed sensor 16 are in a region corresponding to one of the first speed to the sixth speed in the gear position estimation map of FIG. 6. The predetermined range is set in accordance with the signal from the engine rotation speed sensor 71 or the signal from the vehicle speed sensor 16. In other words, the predetermined range is set based on the vehicle speed detected from the signal from the vehicle speed sensor 16 corresponding to the engine rotation speed detected from the signal from the engine rotation speed sensor 71. Alternatively, the predetermined range is set based on the engine rotation speed detected from the signal from the engine rotation speed sensor 71 corresponding to the vehicle speed detected from the signal from the vehicle speed sensor 16. In short, the predetermined range is set based on the signal from one of the engine rotation speed sensor and the vehicle speed sensor corresponding to the signal from the other one of the vehicle speed sensor and the engine rotation speed sensor. To be more specific, the predetermined range is determined in such a way that, for example, when the vehicle speed detected from the signal from the vehicle speed sensor 16 is A shown in FIG. 6, the engine rotation speed detected from the signal from the engine rotation speed sensor 71 is not smaller than B1 and not larger than B2, which correspond to the vehicle speed A. The determination of whether the estimated gear position is a gear position different from the neutral position is equivalent to the determination that, when the vehicle speed is A in FIG. 6, the engine rotation speed falls within a range of not smaller than B1 and not larger than B2, which correspond to the vehicle speed A. The determination of whether the estimated gear position is a gear position different from the neutral position is equivalent to the determination that the transmission ratio estimated based on the engine rotation speed and the vehicle speed is in one of the regions corresponding to the first speed to the sixth speed in the gear position estimation map of FIG. 6. On this account, the sensor failure detection unit 94 determines that the estimated gear position is a gear position different from the neutral position when the signal from one of the engine rotation speed sensor and the vehicle speed sensor falls within a predetermined range which is set based on the signal from the other one of the vehicle speed sensor and the engine rotation speed sensor. Furthermore, the sensor failure detection unit 94 is able to determine whether the transmission ratio estimated based on the engine rotation speed and the vehicle speed falls within a predetermined range by determining whether the signal from one of the engine rotation speed sensor and the vehicle speed sensor falls within a predetermined range which is set based on the signal from the other one of the vehicle speed sensor and the engine rotation speed sensor. To be more specific, when the transmission ratio estimated based on the engine rotation speed and the vehicle speed falls within one of the regions of the first speed to the sixth speed in the gear position estimation map in FIG. 6, the sensor failure detection unit 94 determines that the estimated gear position is a gear position different from the neutral position.

Meanwhile, when the signal from the engine rotation speed sensor 71 and the signal from the vehicle speed sensor 16 do not fall within the predetermined range, the sensor failure detection unit 94 determines that the estimated gear position is not a gear position different from the neutral position. To put it differently, the sensor failure detection unit 94 determines that the estimated gear position is not a gear position different from the neutral position when the signal from one of the engine rotation speed sensor and the vehicle speed sensor does not within a predetermined range which is set based on the signal from the other one of the vehicle speed sensor and the engine rotation speed sensor. When the sensor failure detection unit 94 determines that the estimated gear position is not a gear position different from the neutral position while the neutral clutch detection unit 96 does not detect the on state of the neutral switch 78 or the clutch switch 19, the sensor failure detection unit 94 determines that there is a failure of at least one of the neutral switch 78, clutch switch 19, engine rotation speed sensor 71, and the vehicle speed sensor 16. When the signal from the engine rotation speed sensor 71 and the signal from the vehicle speed sensor 16 do not fall within the predetermined range, either the gear position estimated by the gear position estimation unit 93 is the neutral position or the clutch 81 of the gearbox 80 is in the cut-off state or the half clutch state. Meanwhile, when the neutral clutch detection unit 96 does not detect the on state of the neutral switch 78 or the clutch switch 19, the neutral switch 78 is in the off state and the clutch switch 19 is in the off state. When the neutral switch 78 is in the off state and the clutch switch 19 is in the off state, the gear position is a gear position different from the neutral position. When all of the neutral switch 78, the clutch switch 19, the engine rotation speed sensor 71, and the vehicle speed sensor 16 operate normally, the gear position estimation unit 93 estimates that the gear position is one of the first speed to the sixth speed on condition that the neutral switch 78 is in the off state and the clutch switch 19 is in the off state. In other words, when all of the neutral switch 78, the clutch switch 19, the engine rotation speed sensor 71, and the vehicle speed sensor 16 operate normally, the signal from the engine rotation speed sensor 71 and the signal from the vehicle speed sensor 16 fall within the predetermined range on condition that the neutral clutch detection unit 96 does not detect the on state of the neutral switch 78 or the clutch switch 19. Therefore, when the signal from the engine rotation speed sensor 71 and the signal from the vehicle speed sensor 16 do not fall within the predetermined range while the neutral clutch detection unit 96 does not detect the on state of the neutral switch 78 or the clutch switch 19, the sensor failure detection unit 94 determines that there is a failure of at least one of the neutral switch 78, the clutch switch 19, engine rotation speed sensor 71, and the vehicle speed sensor 16.

The gear position sensor failure determination unit 95 determines whether there is a failure of the gear position sensor 77 when the neutral clutch detection unit 96 does not detect the on state of the neutral switch 78 or the clutch switch 19 and the signal from the engine rotation speed sensor 71 and the signal from the vehicle speed sensor 16 fall within the predetermined range. The gear position sensor failure determination unit 95 determines whether there is a failure of the gear position sensor 77 by comparing the gear position detected by the gear position sensor 77 with the estimated gear position estimated by the gear position estimation unit 93.

To be more specific, the gear position sensor failure determination unit 95 compares the estimated gear position estimated by the gear position estimation unit 93 with the gear position detected by the gear position sensor 77. When the estimated gear position is different from the gear position detected by the gear position sensor 77, the gear position sensor failure determination unit 95 determines that there is a tentative failure of the gear position sensor 77. The gear position sensor failure determination unit 95 compares two or more estimated gear positions with the gear position detected by the gear position sensor 77. In other words, the gear position sensor failure determination unit 95 performs the failure determination of the gear position sensor 77 more than once. When the ratio of tentative failures to the number of times of failure determination of the gear position sensor 77 is not smaller than a predetermined ratio, the gear position sensor failure determination unit 95 determines that there is a failure of the gear position sensor 77. The predetermined ratio is, for example, 30% to 100%. When the ratio of tentative failures to the number of times of failure determination of the gear position sensor 77 is smaller than the predetermined ratio, the gear position sensor failure determination unit 95 determines that there is no failure of the gear position sensor 77. The ECU 90 starts the process of failure determination of the gear position sensor 77 by the gear position sensor failure determination unit 95 at a predetermined timing. The predetermined timing is, for example, at the start of the engine unit 11.

The gear position sensor failure determination unit 95 compares a predetermined value with a difference between the rotation speed of the front wheel 2 detected by the front wheel speed sensor 17 and the rotation speed of the rear wheel 3 detected by the rear wheel speed sensor 18. When the difference between the rotation speeds is not smaller than the predetermined value, the gear position sensor failure determination unit 95 does not perform the failure determination of the gear position sensor 77.

Furthermore, the gear position sensor failure determination unit 95 determines whether there is a failure which is short-circuit or disconnection in the gear position sensor 77, based on the signal from the gear position sensor 77. The gear position sensor failure determination unit 95 determines that short-circuit or disconnection occurs in the gear position sensor 77, when the signal from the gear position sensor 77 is larger than the upper limit or smaller than the lower limit of a signal range of the gear position sensor 77 corresponding to the plural gear positions. The upper limit and the lower limit of the signal range of the gear position sensor 77 are set in advance based on the signal from the gear position sensor 77 corresponding to the plural gear positions. The upper limit is the maximum value of the signal range of the gear position sensor 77 corresponding to the first speed to the sixth speed. The lower limit is the minimum value of the signal range of the gear position sensor 77 corresponding to the first speed to the sixth speed.

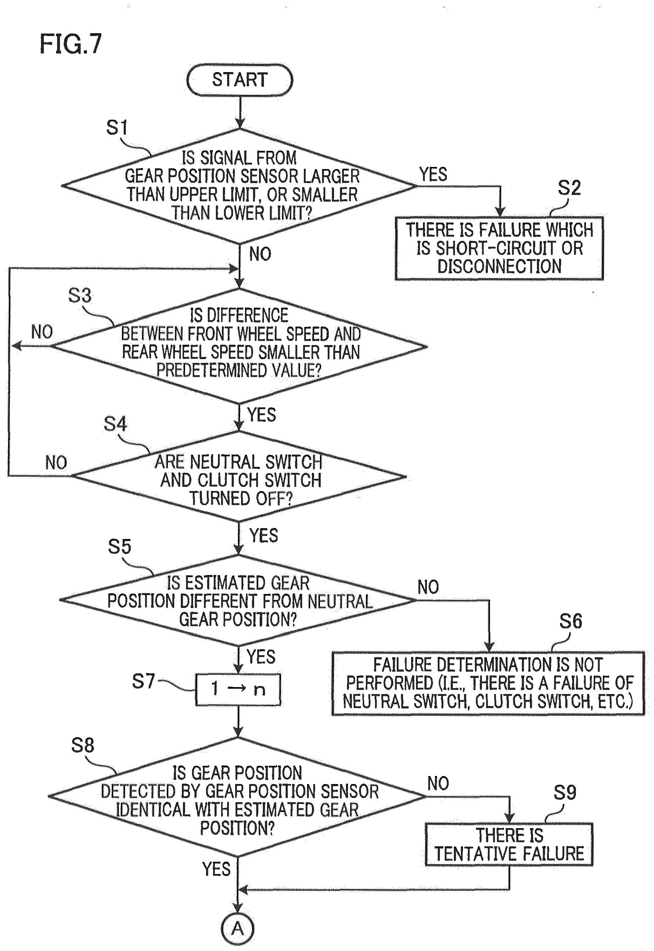

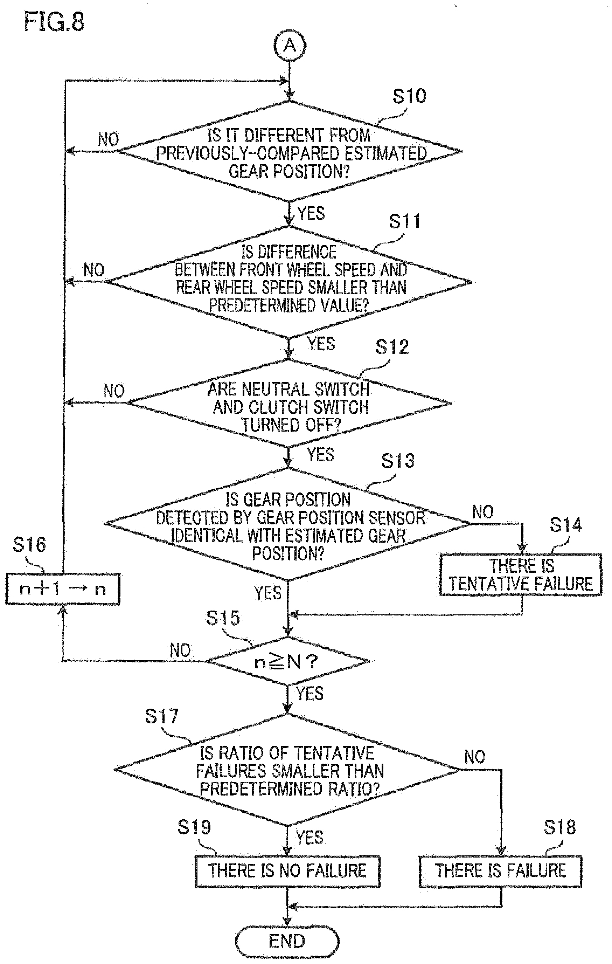

Now, with reference to the flowcharts shown in FIG. 7 and FIG. 8, an example of steps of failure determination of the gear position sensor 77 by the ECU 90 which is a gear position sensor failure detector will be described. The process of failure determination of the gear position sensor 77 by the ECU 90 starts, for example, at the start of the engine unit 11, as described above.

To begin with, the gear position sensor failure determination unit 95 determines if the signal from the gear position sensor 77 is larger than the upper limit or smaller than the lower limit which are set in advance (step S1). When the signal from the gear position sensor 77 is larger than the upper limit or smaller than the lower limit which are set in advance (Yes in the step S1), the gear position sensor failure determination unit 95 determines if there is short-circuit or disconnection in the gear position sensor 77 (step S2). When the signal from the gear position sensor 77 is not larger than the upper limit or not smaller than the lower limit which are set in advance (No in the step S1), the gear position sensor failure determination unit 95 compares the rotation speed of the front wheel 2 detected by the front wheel speed sensor 17 with the rotation speed of the rear wheel 3 detected by the rear wheel speed sensor 18 (step S3). This step S3 may be executed after a predetermined time elapses from the start of the engine unit 11.

When the difference between the rotation speed of the front wheel 2 and the rotation speed of the rear wheel 3 is not smaller than a predetermined value (No in the step S3), the process goes back to the step S3. Meanwhile, when the difference between the rotation speed of the front wheel 2 and the rotation speed of the rear wheel 3 is smaller than the predetermined value (Yes in the step S3), the neutral clutch detection unit 96 determines if both of the neutral switch 78 and the clutch switch 19 are in the off state (step S4). When both of the neutral switch 78 and the clutch switch 19 are not in the off state (No in the step S4), the process goes back to the step S3. Meanwhile, when both of the neutral switch 78 and the clutch switch 19 are in the off state (Yes in the step S4), the sensor failure determination unit 94 determines if the estimated gear position is a gear position different from the neutral position (step S5). When the estimated gear position is not a gear position different from the neutral position (No in the step S5), the gear position sensor failure determination unit 95 does not perform failure determination of the gear position sensor 77 (step S6). The sensor failure determination unit 94 then determines that there is a failure of at least one of the neutral switch 78, clutch switch 19, the engine rotation speed sensor 71, and the vehicle speed sensor 16 (step S6). Meanwhile, when the estimated gear position is a gear position different from the neutral position (Yes in the step S5), the gear position sensor failure determination unit 95 performs failure determination of the gear position sensor 77. To begin with, n is set at 1 (step S7). The gear position sensor failure determination unit 95 then compares the estimated gear position with the gear position detected by the gear position sensor 77 (step S8). When the estimated gear position is different from the gear position detected by the gear position sensor 77 (No in the step S8), the gear position sensor failure determination unit 95 determines that there is a tentative failure of the gear position sensor 77 (step S9).

Thereafter, when the estimated gear position is identical with the gear position detected by the gear position sensor 77 (Yes in the step S8), the gear position sensor failure determination unit 95 is on standby until the estimated gear position estimated by the gear position estimation unit 93 becomes different from the estimated gear position which has been compared last time with the detection result of the gear position sensor 77 (step S10). In other words, the gear position sensor failure determination unit 95 is on standby until the estimated gear position becomes different from the estimated gear position with which the failure determination of the gear position sensor 77 has been performed last time by the gear position sensor failure determination unit 95. When the estimated gear position estimated by the gear position estimation unit 93 becomes different from the estimated gear position which was compared last time with the detection result of the gear position sensor 77 (Yes in the step S10), the gear position sensor failure determination unit 95 compares the rotation speed of the front wheel 2 detected by the front wheel speed sensor 17 with the rotation speed of the rear wheel 3 detected by the rear wheel speed sensor 18 (step S11).

When the difference between the rotation speed of the front wheel 2 and the rotation speed of the rear wheel 3 is not smaller than a predetermined value (No in the step S11), the process goes back to the step S10. Meanwhile, when the difference between the rotation speed of the front wheel 2 and the rotation speed of the rear wheel 3 is smaller than the predetermined value (Yes in the step S11), the neutral clutch detection unit 96 determines if both of the neutral switch 78 and the clutch switch 19 are in the off state (step S12). When both of the neutral switch 78 and the clutch switch 19 are not in the off state (No in the step S12), the process goes back to the step S10. Meanwhile, when both of the neutral switch 78 and the clutch switch 19 are in the off state (Yes in the step S12), the gear position sensor failure determination unit 95 compares the estimated gear position with the gear position detected by the gear position sensor 77 (step S13). When the estimated gear position is different from the gear position detected by the gear position sensor 77 (No in the step S13), the gear position sensor failure determination unit 95 determines that there is a tentative failure of the gear position sensor 77 (step S14). When the estimated gear position is identical with the gear position detected by the gear position sensor 77 (Yes in the step S13), the gear position sensor failure determination unit 95 determines whether n is not smaller than a predetermined number N (step S15). The predetermined number N is stored in the ECU 90 in advance. The predetermined number N may be identical to the number of gear positions other than the neutral position or another number. When n is equal to or smaller than the predetermined number N (No in the step S15), n is incremented by one (S16).

The gear position sensor failure determination unit 95 repeats the process from the step S10 to the step S16 until n becomes not smaller than the predetermined number N (Yes in the step S15). The gear position sensor failure determination unit 95 then determines if the ratio of tentative failures to the number of times of comparison between the estimated gear position and the gear position detected by the gear position sensor 77 is smaller than a predetermined ratio (step S17). When the ratio of tentative failures is not smaller than the predetermined ratio (No in the step S17), the gear position sensor failure determination unit 95 determines that there is a failure of the gear position sensor 77 (step S18). When the ratio of tentative failures is smaller than the predetermined ratio (Yes in the step S17), the gear position sensor failure determination unit 95 determines that there is no failure of the gear position sensor 77 (step S19).

As described above, the engine unit 11 includes the crankshaft 25, the gearbox 80, and the crankcase 21. The gearbox 80 has plural gear positions with each of which the rotation speed of the crankshaft 25 is changed at one of the different transmission ratios, respectively, and the power input from the crankshaft 25 is transmitted to the rear wheel 3. The gearbox 80 also has a gear position (neutral position) with which the power input from the crankshaft 25 is not transmitted to the rear wheel 3.

The crankcase 21 supports the crankshaft 25. The crankcase 21 supports the gearbox 80. The integrally-formed crankcase 21 supports the crankshaft 25 and the gearbox 80. The motorcycle 1 includes the engine rotation speed sensor 71, the vehicle speed sensor 16, the gear position sensor 77, and the ECU 90. The engine rotation speed sensor 71 is configured to detect the engine rotation speed. The vehicle speed sensor 16 is configured to detect the vehicle speed. The gear position sensor 77 is configured to detect the gear position of the gearbox 80. In accordance with the rotation of the crankshaft 25, the crankcase 21 supporting the crankshaft 25 vibrates. The gear position sensor 77 provided in the crankcase 21 also vibrates. In other words, the gear position sensor 77 is susceptible to an influence of vibration. The gear position sensor 77 is provided in the crankcase 21. The gear position sensor 77 is exposed to engine oil which lubricates the crankcase 21. The gear position sensor 77 is closer to a detection target than the vehicle speed sensor 16 is to the detection target. For this reason, contaminants in the engine oil are more likely to adhere to the gear position sensor 77 than to the vehicle speed sensor 16. The engine rotation speed sensor 71 is a contactless engine rotation speed sensor. The vehicle speed sensor 16 is a contactless vehicle speed sensor. The engine rotation speed sensor 71 and the vehicle speed sensor 16 are therefore not susceptible to an influence of vibration. Furthermore, the engine rotation speed sensor 71 and the vehicle speed sensor 16 may be provided inside the engine unit 11. Therefore contaminants are unlikely to adhere to the engine rotation speed sensor 71 and the vehicle speed sensor 16.

The ECU 90 includes the gear position estimation unit 93 and the sensor failure detection unit 94. The sensor failure detection unit 94 includes the gear position sensor failure determination unit 95. The gear position estimation unit 93 estimates the gear position of the gearbox 80 based on a signal from the engine rotation speed sensor 71 and a signal from the vehicle speed sensor 16. For example, the gear position estimation unit 93 is able to calculate a transmission ratio based on the engine rotation speed and the vehicle speed. Furthermore, the gear position estimation unit 93 is able to estimate the gear position from the calculated transmission ratio. In this connection, as described above, the engine rotation speed sensor 71 and the vehicle speed sensor 16 are not susceptible to an influence of vibration and contaminants are unlikely to adhere to them. It is therefore possible to accurately estimate the gear position based on the signal from the engine rotation speed sensor 71 and the signal from the vehicle speed sensor 16. The gear position sensor failure determination unit 95 then determines whether there is a failure of the gear position sensor 77 by comparing the estimated gear position with the gear position detected by the gear position sensor. In other words, when the estimated gear position is different from the gear position detected by the gear position sensor 77, a failure that the gear position sensor 77 cannot detect the correct gear position is detected. With this, the gear position sensor failure determination unit 95 is able to detect, as a failure of the gear position sensor 77, a phenomenon that a gear position detected based on a signal from the gear position sensor 77 is different from an actual gear position. It is therefore possible to improve the capability of detecting a failure of the gear position sensor 77 provided in the motorcycle 1.

The sensor failure detection unit 94 determines whether there is a failure of the gear position sensor 77 by the gear position sensor failure determination unit 95 when the signal from the engine rotation speed sensor 71 and the signal from the vehicle speed sensor 16 fall within a predetermined range. The predetermined range is set based on the signal from the engine rotation speed sensor 71 and the signal from the vehicle speed sensor 16. In other words, the predetermined range is set in advance based on a signal voltage range detectable by the engine rotation speed sensor 71 and the vehicle speed sensor 16. When the signal from the engine rotation speed sensor 71 and the signal from the vehicle speed sensor 16 fall within the predetermined range which is set in advance based on the signal from the engine rotation speed sensor 71 and the signal from the vehicle speed sensor 16, the signal from one of the engine rotation speed sensor 71 and the vehicle speed sensor 16 falls within a predetermined range which is set in advance based on the signal from the other one of the engine rotation speed sensor 71 and the vehicle speed sensor 16. The gear position sensor failure determination unit 95 may not determine whether there is a failure of the gear position sensor 77 when the signal from the engine rotation speed sensor 71 and the signal from the vehicle speed sensor 16 do not fall within the predetermined range. As such, the gear position sensor failure determination unit 95 may not perform failure determination of the gear position sensor when the transmission ratio estimated based on the engine rotation speed and the vehicle speed does not fall within a predetermined range. Failure determination is therefore not performed for the gear position sensor 77 when there is a failure of the engine rotation speed sensor 71 or the vehicle speed sensor 16. Furthermore, depending on how the predetermined range is set, failure determination of the gear position sensor 77 may not be performed when the gear position estimated by the gear position estimation unit 93 is the neutral position. This prevents erroneous detection of a failure of the gear position sensor 77 and further improves the capability of detecting a failure of the gear position sensor 77.

The predetermined range includes two or more ranges which correspond to two or more of the gear positions excluding the neutral position, respectively. The two or more ranges do not overlap one another. The sensor failure detection unit 94 determines whether there is a failure of the gear position sensor 77 by the gear position sensor failure determination unit 95 when the signal from the engine rotation speed sensor 71 and the signal from the vehicle speed sensor 16 fall within the predetermined range. In other words, the sensor failure detection unit 94 may not perform failure determination of the gear position sensor 77 by the gear position sensor failure determination unit 95, when the transmission ratio estimated from the engine rotation speed and the vehicle speed falls within none of the two or more ranges. It is therefore possible to prevent erroneous detection of a failure of the gear position sensor 77. The capability of detecting a failure of the gear position sensor 77 is further improved.

The ECU 90 includes the neutral clutch detection unit 96. When the gear position of the gearbox 80 is the neutral position, the correct gear position cannot be estimated. Furthermore, when the clutch 81 is in the cut-off state or the half clutch state, the gear position estimation unit 93 cannot estimate the correct gear position. The neutral clutch detection unit 96 detects one of the following states: the gear position of the gearbox 80 is the neutral position; the clutch 81 is in the cut-off state; and the clutch 81 is in the half clutch state. The neutral clutch detection unit 96 detects each of these states by the neutral switch 78 or the clutch switch 19. The gear position sensor failure determination unit 95 does not perform failure determination of the gear position sensor 77 when the neutral clutch detection unit 96 detects one of the following states: the gear position of the gearbox 80 is the neutral position; the clutch 81 is in the cut-off state; and the clutch 81 is in the half clutch state. To put it differently, the gear position sensor failure determination unit 95 performs failure determination of the gear position sensor 77 when the neutral clutch detection unit 96 detects none of the following states: the gear position of the gearbox 80 is the neutral position; the clutch 81 is in the cut-off state; and the clutch 81 is in the half clutch state. For this reason, when the gear position of the gearbox 80 is the neutral position or when the clutch 81 of the gearbox 80 is in the cut-off state or the half clutch state, a failure of the gear position sensor 77 is not erroneously detected. The capability of detecting a failure of the gear position sensor 77 is therefore further improved.

When the rear wheel 3 slips and idles, the gear position estimation unit 93 cannot estimate the correct gear position. When the difference between the rotation speed of the front wheel 2 detected by the front wheel speed sensor 17 and the rotation speed of the rear wheel 3 detected by the rear wheel speed sensor 18 is equal to or larger than a predetermined value, it is understood that the rear wheel 3 slips and idles. When the difference between the rotation speed of the front wheel 2 detected by the front wheel speed sensor 17 and the rotation speed of the rear wheel 3 detected by the rear wheel speed sensor 18 is equal to or larger than the predetermined value, the gear position sensor failure determination unit 95 does not perform failure determination of the gear position sensor 77. To put it differently, when the difference between the rotation speed of the front wheel 2 detected by the front wheel speed sensor 17 and the rotation speed of the rear wheel 3 detected by the rear wheel speed sensor 18 is smaller than the predetermined value, the gear position sensor failure determination unit 95 performs failure determination of the gear position sensor 77. It is therefore possible to prevent erroneous detection of a failure of the gear position sensor 77 when the rear wheel 3 idles. The capability of detecting a failure of the gear position sensor 77 is therefore further improved.

When there is short-circuit or disconnection in the gear position sensor 77, the signal from the gear position sensor 77 is larger than the upper limit or smaller than the lower limit of the signal range of the gear position sensor 77 corresponding to the plural gear positions. The upper limit and the lower limit of the signal range of the gear position sensor 77 corresponding to the plural gear positions are set in advance. The gear position sensor failure determination unit 95 determines that short-circuit or disconnection occurs in the gear position sensor 77, when the signal from the gear position sensor 77 is larger than the upper limit or smaller than the lower limit of the signal range of the gear position sensor 77 corresponding to the plural gear positions. The capability of detecting a failure of the gear position sensor 77 is therefore further improved.

Preferred embodiments of the present teaching have been described above. However, the present teaching is not limited to the above-described embodiments, and various changes can be made within the scope of the claims. Further, modifications described below may be used in combination as needed. For example, the term "preferably" or "preferable" herein is non-exclusive and means "preferably/preferable, but not limited to."

The gear position sensor 77 of the embodiment above is a contact-type gear position sensor. The gear position sensor 77 may be a contactless gear position sensor. The gear position sensor 77 which is a contactless gear position sensor detects the rotational angle of the shift cam 88. The gear position sensor 77 detects that the gear position is one of the first speed to the sixth speed and the neutral position by comparing the detected rotational angle with a range of predetermined rotational angles, which is stored in advance. The predetermined range of rotational angles is set to correspond to the first speed to the sixth speed and the neutral position.

The gear position estimation unit 93 may estimate a gear position by calculating a transmission ratio from an arithmetic expression using the engine rotation speed, the vehicle speed, the gear ratio of the gearbox 80, etc., without using the gear position estimation map like FIG. 6 described above.

The gear position sensor failure determination unit 95 of the embodiment above may be arranged not to perform the failure determination of the gear position sensor 77 by the gear position sensor failure determination unit 95 when a failure is found in the engine rotation speed sensor 71, the vehicle speed sensor 16, the front wheel speed sensor 17, or the rear wheel speed sensor 18 by the sensor failure detection unit 94. In this case, when (i) no failure is found in the engine rotation speed sensor 71, the vehicle speed sensor 16, the front wheel speed sensor 17, and the rear wheel speed sensor 18, (ii) the neutral clutch detection unit 96 does not detect the on state of the neutral switch 78 or the clutch switch 19, and (iii) the signal from the engine rotation speed sensor 71 and the signal from the vehicle speed sensor 16 do not fall within the predetermined range, the sensor failure detection unit 94 determines that there is a failure of at least one of the neutral switch 78 and the clutch switch 19. In the failure detection process executed by the gear position sensor failure detector of the embodiment above shown in FIG. 7, between the step S1 and the step S2 of failure determination of the gear position sensor 77 by the ECU 90, the sensor failure detection unit 94 determines whether there is a failure of the engine rotation speed sensor 71, the vehicle speed sensor 16, the front wheel speed sensor 17, or the rear wheel speed sensor 18. In the step S6 shown in FIG. 7 above, the sensor failure determination unit 94 determines that there is a failure of at least one of the neutral switch 78 and clutch switch 19.

The gear position sensor failure determination unit 95 of the embodiment above compares two or more estimated gear positions with the gear position detected by the gear position sensor 77. In other words, the gear position sensor failure determination unit 95 of the embodiment above performs the failure determination of the gear position sensor 77 more than once. Alternatively, the gear position sensor failure determination unit 95 performs the failure determination of the gear position sensor 77 only once. In other words, the gear position sensor failure determination unit 95 may determine whether there is a failure of the gear position sensor 77 by comparing only one estimated gear position other than the neutral position with the gear position detected by the gear position sensor 77.

In the gear position sensor failure determination unit 95 of the embodiment above, the estimated gear position used for the second or subsequent failure determination of the gear position sensor 77 is arranged to be different from the estimated gear position which is used for the directly preceding failure determination of the gear position sensor 77. On this account, the estimated gear positions used for failure determination of the gear position sensor 77 plural times may partially overlap one another. For example, in two failure determinations of the gear position sensor 77, the gear position sensor failure determination unit 95 may use the third speed as the estimated gear position. The gear position sensor failure determination unit 95 may determine the estimated gear position for failure determination of the gear position sensor 77 so that the estimated gear positions for failure determinations of the gear position sensor 77 are different from one another.

The gear position sensor failure determination unit 95 of the embodiment above performs the next failure determination of the gear position sensor 77 after the estimated gear position estimated by the gear position estimation unit 93 becomes different from the estimated gear position used for directly preceding failure determination of the gear position sensor 77. Alternatively, the gear position sensor failure determination unit 95 performs the failure determination of the gear position sensor 77 each time a predetermined time elapses.

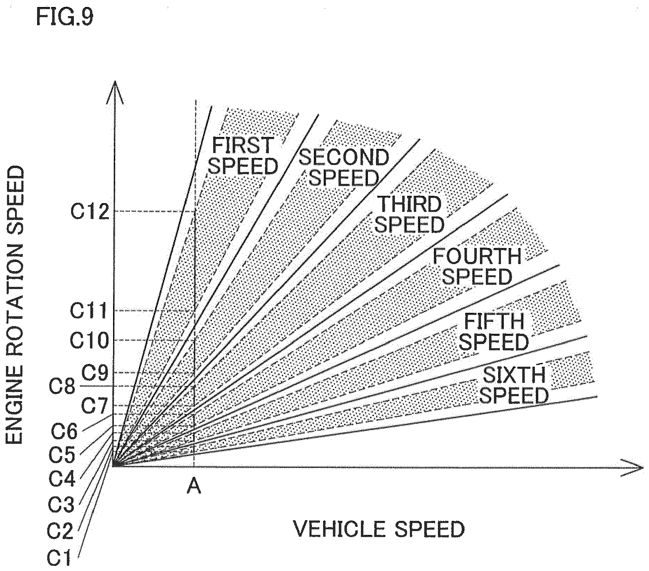

The gear position estimation unit 93 and the gear position sensor failure determination unit 95 of the embodiment above use the gear position estimation map of FIG. 6, in which regions corresponding to the first speed to sixth speed are set. Alternatively, the gear position estimation unit 93 and the gear position sensor failure determination unit 95 may use a gear position estimation map in which the engine rotation speed detected by the engine rotation speed sensor 71 and the vehicle speed detected by the vehicle speed sensor 16 are classified into six regions which are narrower than the respective regions of the first speed to the sixth speed. These six regions are, for example, regions hatched in FIG. 9. In the gear position estimation map shown in FIG. 9, the six regions corresponding to the first speed to the sixth speed, respectively, do not overlap with one another. When the gear position estimation unit 93 estimates the gear position, if the engine rotation speed and the vehicle speed do not fall within the six regions of the gear positions, the gear position sensor failure determination unit 95 may not execute failure determination of the gear position sensor 77. To be more specific, when, the vehicle speed is A, as shown in FIG. 9, for example, it is determined whether the engine rotation speed falls within one of the six regions corresponding to the vehicle speed A. The six regions of the engine rotation speed are a region not smaller than C1 and not larger than C2, a region not smaller than C3 and not larger than C4, a region not smaller than C5 and not larger than C6, a region not smaller than C7 and not larger than C8, a region not smaller than C9 and not larger than C10, and a region not smaller than C11 and not larger than C12, as shown in FIG. 9. The relationship between the regions are C2<C3, C4<C5, C6<C7, C8<C9, and C10<C11. While in this example it is determined whether the signal from the engine rotation speed sensor 71 falls within the predetermined range based on the signal from the vehicle speed sensor 16, it may be determined whether the signal from the vehicle speed sensor 16 falls within a predetermined range based on the signal from the engine rotation speed sensor 71. According to this modification, the capability of detecting a failure of the gear position sensor 77 is further improved. Furthermore, depending on how the predetermined range is set, failure determination of the gear position sensor 77 by the gear position sensor failure determination unit 95 may not be performed when the gear position estimated by the gear position estimation unit 93 is the neutral position. This prevents erroneous detection of a failure of the gear position sensor 77 and further improves the capability of detecting a failure of the gear position sensor 77.

The gear position sensor failure determination unit 95 of the embodiment above determines whether to perform failure determination of the gear position sensor 77 based on a difference between the rotation speed of the front wheel 2 detected by the front wheel speed sensor 17 and the rotation speed of the rear wheel 3 detected by the rear wheel speed sensor 18. Alternatively, the rotation speeds of the front wheel 2 and the rear wheel 3 may not be used for determining whether to execute failure determination of the gear position sensor 77. In such cases, the motorcycle 1 may not include the front wheel speed sensor 17 and the rear wheel speed sensor 18.

The ECU 90 which is the gear position sensor failure detector of the embodiment above may execute the failure determination of the embodiment above after the failure determination recited in Patent Literature 1. With this arrangement, failures such as short-circuit and disconnection in the gear position sensor 77 can be found by the failure determination of Patent Literature 1. In this case, the failure determination described in Patent Literature 1 is executed in place of the step S1 of executing failure determination of the gear position sensor 77 by the ECU 90 and the step S2 in the embodiment above. Accordingly, the ECU 90 which is the gear position sensor failure detector of the embodiment above is not required to execute the step S1 of executing failure determination of the gear position sensor 77 and the step S2 in the embodiment above.

The gear position estimation unit 93 of the embodiment above estimates the gear position based on a signal from the engine rotation speed sensor 71 and a signal from the vehicle speed sensor 16. The gear position estimation unit 93 may use the signal from the rear wheel speed sensor 18 or the front wheel speed sensor 17 in place of the signal from the vehicle speed sensor 16. In this case, the rear wheel speed sensor 18 or the front wheel speed sensor 17 is equivalent to the vehicle speed sensor 16 of the present invention.

The gear position sensor failure determination unit 95 of the embodiment above uses the signal from the neutral switch 78 detected by the neutral clutch detection unit 96, for determining whether to execute failure determination of the gear position sensor 77. Alternatively, the engine unit 11 may not include the neutral switch 78. In such a case, the neutral clutch detection unit 96 detects or estimates whether the gear position of the gearbox 80 is the neutral position, by using another means of the motorcycle 1. For example, the neutral clutch detection unit 96 may estimate whether the gear position of the gearbox 80 is the neutral position, by using the clutch switch 19 and the side stand switch (not illustrated). To be more specific, the neutral clutch detection unit 96 estimates that the gear position of the gearbox 80 is the neutral position when the clutch switch 19 is in the on state and the side stand switch is in the on state. When the clutch switch 19 is in the on state, the clutch lever is gripped. When the side stand switch is in the on state, the side stand is stored.

While in the embodiment above the ECU 90 is equivalent to the gear position sensor failure detector of the present invention, a gear position sensor failure detector may be provided in addition to the ECU 90.

While the gearbox 80 of the embodiment above has the first speed to the sixth speed as the six gear positions different from the neutral position, the number of gear positions which are different from the neutral position is not limited to six. The number of gear positions of the gearbox 80 other than the neutral position may be two or more and five or less, or may be seven or more.

The transmission method of the motorcycle 1 of the embodiment above is manual transmission in which the gear position is changed as the rider operates the clutch lever and the shift pedal. The transmission method of a straddled vehicle which employs the gear position sensor failure detector of the present invention may be full-automatic transmission in which a shift actuator is automatically driven in accordance with the vehicle speed, the engine rotation speed, etc., and the shift gear is switched. Alternatively, semi-automatic transmission in which only the operation of the clutch is automatically done may be employed. In cases of the full-automatic transmission and the semi-automatic transmission, the clutch lever is not provided.

While the engine unit 11 of the embodiment above is a three-cylinder engine, the engine unit 11 may be a multi-cylinder engine having one, two, or more than three cylinders, or may be a single-cylinder engine.

While the engine unit 11 of the First Embodiment or the Second Embodiment is a four-stroke engine, the engine unit 11 may be a two-stroke engine.

While the engine unit 11 of the embodiment above is a water-cooled engine, the engine unit 11 may be a natural air-cooled engine or a forced air-cooled engine. When the engine unit 11 is a natural air-cooled engine or a forced air-cooled engine, an engine temperature sensor for detecting the temperature of the engine main body 20 is provided in place of the coolant water temperature sensor 72. The engine temperature sensor detects the temperature of the crankcase 21, the cylinder body 22, or the cylinder head 23.

The straddled vehicle of the present invention is not limited to the sports-type motorcycle 1 of the embodiment above. The straddled vehicle of the present invention may be a scooter-type motorcycle. The straddled vehicle indicates all types of vehicles on which a rider rides in a manner of straddling on a saddle. The straddled vehicle of the present invention includes motorcycles, tricycles, four-wheeled buggies (ATVs: All Terrain Vehicles), personal water crafts, snowmobiles, and the like.

### [Reference Signs List]

1 motorcycle (straddled vehicle)
2 front wheel
3 rear wheel (driving wheel)
11 engine unit
16 vehicle speed sensor
17 front wheel speed sensor
18 rear wheel speed sensor
19 clutch switch
21 crankcase (crankshaft supporter, gearbox supporter)
25 crankshaft
71 engine rotation speed sensor
77 gear position sensor
78 neutral switch
80 gearbox
81 clutch
90 ECU (gear position sensor failure detector)
94 sensor failure determination unit (failure determination unit)
95 gear position sensor failure determination unit (failure determination unit)
96 neutral clutch detection unit (power non-transmission state detection unit)

## Claims

1. A straddled vehicle (1) comprising:
an engine unit (11) including: a crankshaft (25); a crankshaft supporter (21) supporting the crankshaft (25); a gearbox (80) having gear positions with which a rotation speed of the crankshaft (25) is changed at different transmission ratios, respectively, and power input from the crankshaft (25) is transmitted to a driving wheel (3) and a gear position in which the power input from the crankshaft (25) is not transmitted to the driving wheel (3); and a gearbox supporter (21) supporting the gearbox (80), the crankshaft supporter (21) and the gearbox supporter (21) being integrally molded;
a contactless engine rotation speed sensor (71) configured to detect an engine rotation speed;
a contactless vehicle speed sensor (16) configured to detect a vehicle speed;
a gear position sensor (77) provided in the gearbox supporter (21) to detect the gear position of the gearbox (80); and
a gear position sensor failure detector (90) configured to detect a failure of the gear position sensor (77),
the gear position sensor failure detector (90) including:
a gear position estimation unit (93) configured to estimate the gear position of the gearbox (80) based on a signal from the engine rotation speed sensor (71) and a signal from the vehicle speed sensor (16); and
a failure determination unit (95) configured to determine whether there is a failure of the gear position sensor (77) by comparing the gear position estimated by the gear position estimation unit (93) with the gear position detected by the gear position sensor (77).

2. The straddled vehicle (1) according to claim 1, wherein the failure determination unit (95) is configured to determine whether there is a failure of the gear position sensor (77) when the signal from the engine rotation speed sensor (71) and the signal from the vehicle speed sensor (16) fall within a predetermined range which is set for the signal from the engine rotation speed sensor (71) and the signal from the vehicle speed sensor (16) in advance.

3. The straddled vehicle (1) according to claim 2, wherein the predetermined range includes two or more ranges corresponding, respectively, to two or more of the gear positions excluding the gear position in which the power input from the crankshaft (25) is not transmitted to the driving wheel (3), the two or more ranges not overlapping with one another.

4. The straddled vehicle (1) according to any one of claims 1 to 3, wherein
the gearbox (80) includes a clutch (81) which is switchable between a connection state in which the power input from the crankshaft (25) is transmitted to the driving wheel (3) and a cut-off state in which the power input from the crankshaft (25) is not transmitted to the driving wheel (3),
a power non-transmission state detection unit (96) is provided to detect if the gear position of the gearbox (80) is the gear position in which the power input from the crankshaft (25) is not transmitted to the driving wheel (3), if the clutch (81) is in the cut-off state, and if the clutch (81) is in a half clutch state in which the clutch (81) transmits a part of the power input from the crankshaft (25), and
the failure determination unit (95) is configured to not determine whether there is a failure in the gear position sensor (77) when the power non-transmission state detection unit (96) detects that the gear position of the gearbox (80) is the gear position in which the power input from the crankshaft (25) is not transmitted to the driving wheel (3), the clutch (81) is in the cut-off state, or the clutch (81) is in the half clutch state in which the clutch (81) transmits a part of the power input from the crankshaft (25).

5. The straddled vehicle (1) according to any one of claims 1 to 4, further comprising
a front wheel speed sensor (17) configured to detect a rotation speed of a front wheel (2) and a rear wheel speed sensor (18) configured to detect a rotation speed of a rear wheel (3),
the failure determination unit (95) not determining if there is a failure in the gear position sensor (77) when a difference between the rotation speed of the front wheel (2) detected by the front wheel speed sensor (17) and the rotation speed of the rear wheel (3) detected by the rear wheel speed sensor (18) is equal to or larger than a predetermined value.

6. The straddled vehicle (1) according to any one of claims 1 to 5, wherein
the failure determination unit (95) is configured to determine that short-circuit or disconnection occurs in the gear position sensor (77), when the signal from the gear position sensor (77) is larger than an upper limit of a signal range of the gear position sensor (77) or smaller than a lower limit of the signal range of the gear position sensor (77), the signal range being set in advance in accordance with the gear positions.

## Patentansprüche

1. Ein Grätschsitzfahrzeug (1), das folgende Merkmale aufweist:
eine Motoreinheit (11), die Folgendes umfasst: eine Kurbelwelle (25); eine Kurbelwellenstütze (21), die die Kurbelwelle (25) stützt; einen Getriebekasten (80) mit Getriebepositionen, mit denen eine Drehzahl der Kurbelwelle (25) bei unterschiedlichen Übersetzungsverhältnissen geändert wird und von der Kurbelwelle (25) eingegangene Leistung an ein Antriebsrad (3) übertragen wird, und einer Getriebeposition, bei der die von der Kurbelwelle (25) eingegangene Leistung nicht an das Antriebsrad (3) übertragen wird; und eine Getriebekastenstütze (21), die den Getriebekasten (80) stützt, wobei die Kurbelwellenstütze (21) und die Getriebekastenstütze (21) einstückig geformt sind;
einen kontaktlosen Motordrehzahlsensor (71), der dazu ausgebildet ist, eine Motordrehzahl zu detektieren;
einen kontaktlosen Fahrzeuggeschwindigkeitssensor (16), der dazu ausgebildet ist, eine Fahrzeuggeschwindigkeit zu detektieren;
einen Getriebepositionssensor (77), der in der Getriebekastenstütze (21) bereitgestellt ist, um die Getriebeposition des Getriebekastens (80) zu detektieren; und
einen Getriebepositionssensorausfalldetektor (90), der dazu ausgebildet ist, einen Ausfall des Getriebepositionssensors (77) zu detektieren,
wobei der Getriebepositionssensorausfalldetektor (90) Folgendes umfasst:
eine Getriebepositionsschätzeinheit (93), die dazu ausgebildet ist, die Getriebeposition des Getriebekastens (80) auf der Basis eines Signals von dem Motordrehzahlsensor (71) und eines Signals von dem Fahrzeuggeschwindigkeitssensor (16) zu schätzen; und
eine Ausfallbestimmungseinheit (95), die dazu ausgebildet ist, zu bestimmen, ob ein Ausfall des Getriebepositionssensors (77) aufgetreten ist, indem die durch die Getriebepositionsschätzeinheit (93) geschätzte Getriebeposition mit der durch den Getriebepositionssensor (77) detektierten Getriebeposition verglichen wird.

2. Das Grätschsitzfahrzeug (1) gemäß Anspruch 1, bei dem die Ausfallbestimmungseinheit (95) dazu ausgebildet ist, zu bestimmen, ob ein Ausfall des Getriebepositionssensors (77) aufgetreten ist, wenn das Signal von dem Motordrehzahlsensor (71) und das Signal von dem Fahrzeuggeschwindigkeitssensor (16) in einen vorbestimmten Bereich fallen, der vorab für das Signal von dem Motordrehzahlsensor (71) und das Signal von dem Fahrzeuggeschwindigkeitssensor (16) festgelegt wird.

3. Das Grätschsitzfahrzeug (1) gemäß Anspruch 2, bei dem der vorbestimmte Bereich zwei oder mehr Bereiche umfasst, die jeweils zwei oder mehr der Getriebepositionen außer der Getriebeposition entsprechen, in der die von der Kurbelwelle (25) eingegangene Leistung nicht an das Antriebsrad (3) übertragen wird, wobei die zwei oder mehr Bereiche einander nicht überlappen.

4. Das Grätschsitzfahrzeug (1) gemäß einem der Ansprüche 1 bis 3, bei dem
der Getriebekasten (80) eine Kupplung (81) umfasst, die zwischen einem Verbindungszustand, in dem die von der Kurbelwelle (25) eingegangene Leistung an das Antriebsrad (3) übertragen wird, und einem Unterbrechungszustand umschaltbar ist, in dem die von der Kurbelwelle (25) eingegangene Leistung nicht an das Antriebsrad (3) übertragen wird,
eine Leistungsnichtübertragungszustandsdetektionseinheit (96) dahin gehend bereitgestellt ist, zu detektieren, ob die Getriebeposition des Getriebekastens (80) die Getriebeposition ist, in der die von der Kurbelwelle (25) eingegangene Leistung nicht an das Antriebsrad (3) übertragen wird, ob die Kupplung (81) in dem Unterbrechungszustand ist und ob die Kupplung (81) in einem Halbkupplungszustand ist, in dem die Kupplung (81) einen Teil der von der Kurbelwelle (25) eingegangenen Leistung überträgt, und
die Ausfallbestimmungseinheit (95) dazu ausgebildet ist, nicht zu bestimmen, ob ein Ausfall in dem Getriebepositionssensor (77) aufgetreten ist, wenn die Leistungsnichtübertragungszustandsdetektionseinheit (96) detektiert, dass die Getriebeposition des Getriebekastens (80) die Getriebeposition ist, in der von der Kurbelwelle (25) eingegangene Leistung nicht an das Getrieberad (3) übertragen wird, die Kupplung (81) in dem Unterbrechungszustand ist oder die Kupplung (81) in dem Halbkupplungszustand ist, in dem die Kupplung (81) einen Teil der von der Kurbelwelle (25) eingegangenen Leistung überträgt.

5. Das Grätschsitzfahrzeug (1) gemäß einem der Ansprüche 1 bis 4, das ferner folgende Merkmale aufweist:
einen Vorderradgeschwindigkeitssensor (17), der dazu ausgebildet ist, eine Drehzahl eines Vorderrads (2) zu detektieren, und einen Hinterradgeschwindigkeitssensor (18), der dazu ausgebildet ist, eine Drehzahl eines Hinterrads (3) zu detektieren,
wobei die Ausfallbestimmungseinheit (95) nicht bestimmt, ob ein Ausfall in dem Getriebepositionssensor (77) aufgetreten ist, wenn eine Differenz zwischen der durch den Vorderradgeschwindigkeitssensor (17) detektierten Drehzahl des Vorderrads (2) und der durch den Hinterradgeschwindigkeitssensor (18) detektierten Drehzahl des Hinterrads (3) gleich groß wie oder größer als ein vorbestimmter Wert ist.

6. Das Grätschsitzfahrzeug (1) gemäß einem der Ansprüche 1 bis 5, bei dem
die Ausfallbestimmungseinheit (95) dazu ausgebildet ist, zu bestimmen, dass ein Kurzschluss oder eine Verbindungstrennung in dem Getriebepositionssensor (77) auftritt, wenn das Signal von dem Getriebepositionssensor (77) größer ist als eine Obergrenze eines Signalbereichs des Getriebepositionssensors (77) oder kleiner ist als eine Untergrenze des Signalbereichs des Getriebepositionssensors (77), wobei der Signalbereich vorab gemäß den Getriebepositionen festgelegt wird.

## Revendications

1. Véhicule de type à selle (1), comprenant:
une unité de moteur (11) comportant: un vilebrequin (25); un support de vilebrequin (21) supportant le vilebrequin (25); une boîte de vitesses (80) présentant des positions d'engrenage par lesquelles est modifiée une vitesse de rotation du vilebrequin (25) respectivement à différents rapports de transmission, et l'énergie fournie par le vilebrequin (25) est transmise à une roue motrice (3) et une position de rapport dans laquelle l'énergie fournie par le vilebrequin (25) n'est pas transmise à la roue motrice (3); et un support de boîte de vitesses (21) supportant la boîte de vitesses (80), le support de vilebrequin (21) et le support de boîte de vitesses (21) étant moulés de manière solidaire;
un capteur de vitesse de rotation de moteur sans contact (71) configuré pour détecter une vitesse de rotation de moteur;
un capteur de vitesse de véhicule sans contact (16) configuré pour détecter une vitesse de véhicule;
un capteur de position de rapport (77) prévu dans le support de boîte de vitesses (21) pour détecter la position de rapport de la boîte de vitesses (80); et
un détecteur de défaillance de capteur de position de rapport (90) configuré pour détecter une défaillance du capteur de position de rapport (77),
le détecteur de défaillance de capteur de position de rapport (90) comportant:
une unité d'estimation de position de rapport (93) configurée pour estimer la position de rapport de la boîte de vitesses (80) sur base d'un signal du capteur de vitesse de rotation de moteur (71) et d'un signal du capteur de vitesse de véhicule (16); et
une unité de détermination de défaillance (95) configurée pour déterminer s'il existe une défaillance du capteur de position de rapport (77) en comparant la position de rapport estimée par l'unité d'estimation de position de rapport (93) avec la position de rapport détectée par le capteur de position de rapport (77).

2. Véhicule de type à selle (1) selon la revendication 1, dans lequel l'unité de détermination de défaillance (95) est configurée pour déterminer s'il existe une défaillance du capteur de position de rapport (77) lorsque le signal du capteur de vitesse de rotation de moteur (71) et le signal du capteur de vitesse de véhicule (16) tombent dans une plage prédéterminée qui est réglée à l'avance pour le signal du capteur de vitesse de rotation de moteur (71) et le signal du capteur de vitesse de véhicule (16).

3. Véhicule de type à selle (1) selon la revendication 2, dans lequel la plage prédéterminée comporte deux ou plusieurs plages correspondant respectivement à deux ou plusieurs des positions de rapport à l'exclusion de la position de rapport dans laquelle l'énergie fournie par le vilebrequin (25) n'est pas transmise à la roue motrice (3), les deux ou plusieurs plages ne venant pas en recouvrement.

4. Véhicule de type à selle (1) selon l'une quelconque des revendications 1 à 3, dans lequel
la boîte de vitesses (80) comporte un embrayage (81) qui est commutable entre un état de connexion dans lequel la l'énergie fournie par le vilebrequin (25) est transmise à la roue motrice (3) et un état de coupure dans lequel l'énergie fournie par le vilebrequin (25) n'est pas transmise à la roue motrice (3),
une unité de détection d'état de non-transmission d'énergie (96) est prévue pour détecter si la position de rapport de la boîte de vitesses (80) est la position de rapport dans laquelle l'énergie fournie par le vilebrequin (25) n'est pas transmise à la roue motrice (3) si l'embrayage (81) est à l'état de coupure et si l'embrayage (81) est dans un état de semi-embrayage dans lequel l'embrayage (81) transmet une partie de l'énergie fournie par le vilebrequin (25), et
l'unité de détermination de défaillance (95) est configurée pour ne pas déterminer s'il existe une défaillance dans le capteur de position de rapport (77) lorsque l'unité de détection d'état de non-transmission d'énergie (96) détecte que la position de rapport de la boîte de vitesses (80) est la position de rapport dans laquelle l'énergie fournie par le vilebrequin (25) n'est pas transmise à la roue motrice (3), que l'embrayage (81) est à l'état de coupure ou l'embrayage (81) est à l'état de semi-embrayage dans lequel l'embrayage (81) transmet une partie de l'énergie fournie par le vilebrequin (25).

5. Véhicule de type à selle (1) selon l'une quelconque des revendications 1 à 4, comprenant par ailleurs
un capteur de vitesse de roue avant (17) configuré pour détecter une vitesse de rotation d'une roue avant (2) et un capteur de vitesse de roue arrière (18) configuré pour détecter une vitesse de rotation d'une roue arrière (3),
l'unité de détermination de défaillance (95) ne déterminant pas s'il existe une défaillance dans le capteur de position de rapport (77) lorsqu'une différence entre la vitesse de rotation de la roue avant (2) détectée par le capteur de vitesse de roue avant (17) et la vitesse de rotation de la roue arrière (3) détectée par le capteur de vitesse de roue arrière (18) est égale ou supérieure à une valeur prédéterminée.

6. Véhicule de type à selle (1) selon l'une quelconque des revendications 1 à 5, dans lequel
l'unité de détermination de défaillance (95) est configurée pour déterminer qu'il se produit un court-circuit ou une déconnexion dans le capteur de position de rapport (77) lorsque le signal du capteur de position de rapport (77) est supérieur à une limite supérieure d'une plage de signal du capteur de position de rapport (77) ou inférieur à une limite inférieure de la plage de signal du capteur de position de rapport (77), la plage de signal étant réglée à l'avance selon les positions de rapport.
